(19) **Europäisches Patentamt**

**European Patent Office**

**Office européen des brevets**

(11) **EP 0 490 890 B1**

(12) **EUROPEAN PATENT SPECIFICATION**

(45) Date of publication and mention
of the grant of the patent:
**26.04.2000 Bulletin 2000/17**

(51) Int. Cl.$^7$: **G06F 17/60**, G05B 19/418

(21) Application number: **89910289.1**

(22) Date of filing: **05.09.1989**

(86) International application number:
**PCT/US89/03828**

(87) International publication number:
**WO 91/03793 (21.03.1991 Gazette 1991/07)**

(54) **METHOD AND APPARATUS FOR PROCESS MANUFACTURE CONTROL**

VERFAHREN UND VORRICHTUNG ZUR STEUERUNG EINES HERSTELLUNGSVERFAHRENS

PROCEDE ET APPAREIL DE COMMANDE D'UN PROCEDE DE FABRICATION

(84) Designated Contracting States:
**AT BE CH DE FR GB IT LI LU NL SE**

(43) Date of publication of application:
**24.06.1992 Bulletin 1992/26**

(73) Proprietor:
**Marcam Solutions, Inc.
Newton, MA 02150 (US)**

(72) Inventors:
• **EBLING, Thomas, D.
Boston, MA 02108 (US)**
• **CONNOR, Susan, J.
Harvard, MA 01451 (US)**

• **HOWD, Thomas, C.
Framingham, MA 01701 (US)**
• **THOMPSON, Olin, W., Jr.
Newton, MA 01259 (US)**

(74) Representative:
**Greenwood, John David et al
Graham Watt & Co.
Riverhead
Sevenoaks Kent TN13 2BN (GB)**

(56) References cited:
**US-A- 4 383 298        US-A- 4 646 238
US-A- 4 648 023        US-A- 4 698 766
US-A- 4 827 423**

EP 0 490 890 B1

## Description

Background

The invention relates to computer aided material requirements planning and, more particularly, to digital data processing systems for monitoring and controlling manufacturing processes.

The art has only recently introduced digital data processing systems for aiding manufacturers in supervising and directing the production of goods. International Business Machines, Inc., for example, markets the MAPICS and COPICS systems for simulating, to a limited extent, discrete manufacturing processes. These systems are understood to operate by constructing models of the manufacturing process based upon the traditional bill of material and related routing concepts. Similar discrete manufacturing simulation and modeling systems are marketed by Arthur Anderson, PCR, and SSA.

In modeling of bills of material, designers of the prior art material requirements planning (or "MRP") systems attempt to represent relations between produced goods and consumed articles on one-to-one or one-to-many bases. That is, the designers base their systems upon models in which users may define relationships such that a single produced good may relate to one consumed article (i.e., "one-to-one" relationship) or, alternatively, to plural consumed articles (i.e., a "one-to-many" relationship).

These sorts of relationships are readily visualized in a simplistic model of motorcycle manufacture. Here, a single produced good, a motor bike, may be assembled by combining multiple component sub-assemblies, e.g., a power assembly and a running assembly. These sub-assemblies, in turn, may be constructed from their own component sub-assemblies. For example, the power assembly may be constructed from an engine and a power train. While, the engine itself may be assembled from a housing containing a fuel-air system, an ignition system, a feedback system, and a lubrication system.

The second aspect of prior art CAM systems calls for the independent modeling of materials routing slips. In this aspect, the prior systems characterize movement of individual sub-assemblies from location to location, independent of those relations which may be represented by the corresponding bill of material model. Thus, a routing slip model for the construction of a motorbike may represent the necessity of having two particular components, e.g. the exhaust manifold and handlebars, available at the start of the assembly process, even where, in reality, these parts are needed at different times of the manufacturing process.

U.S. Patent 4,648,023 is said to disclose a manufacturing control system that establishes a network of manufacturing activities, assigns time duration estimates to each activity and establishes baseline schedule dates for the start and completion of those activities. This baseline schedule dares for the start and completion of those activities. This baseline schedule data is said to provide a constant reference against which external component availabilities and actual progress are measured. The principle control variable, referred to as "slack." is said to be a measure of the deviation from the baseline data set. It is said to be used to determine the projected final completion date, allocate resources and order queues.

U.S. Patent 4,827,423 is said to provide an integrated manufacturing system having a plurality of levels of computer control for organizing and disseminating information for controlling shop floor level systems. Both scheduling data and data relating to process, product and material specifications as well as bills of material are said to be generated in an upper level computer system and refined for downloading as needed to the lower level computers that control shop floor processes.

A drawback of the prior art techniques resides in their inability to model the full range of manufacturing processes. Although specifically designed to aid in the production of discrete manufactures, e.g., motorbikes, telephones, etc., the systems fail to provide mechanisms permitting accurate modeling of more than the most rudimentary aspects of such production. Moreover, with respect to the production of repetitive and process manufactures, e.g., petrochemicals, foods, etc., the prior art techniques prove almost wholly inapplicable. As discussed below, the prior art techniques are unable to model with any degree of reliability the operation of manufacturing processes of the type represented, for example, by a petroleum refinery, where a single consumed resource, crude oil, is used to produce a plurality of petrochemical products and by-products.

An object of the invention, therefore, is to provide an improved system for manufacturing requirements planning.

More particularly, an object of the invention is to provide a digital data processing system permitting the monitoring and control of process and repetitive manufacture, as well as discrete manufactures.

Another object of the invention is to provide a digital data processing system capable of accurately modeling and simulating the aforementioned manufacturing processes and to provide accurate scheduling, cost accounting, and reporting facilities.

These and other objects of the invention are apparent in the description which follows, and are achieved by an apparatus as set out in appended claim 1 and a method as set out in appended claim 16.

Summary

The aforementioned and other objects are attained by the invention, which provides digital data processing methods and apparatus for the control of process, repetitive, and discrete manufacturing. The system provides greater control of the manufacturing process through the use of several innovative modeling and reporting mechanisms. Among these, the unique capability to represent relationships between elements, including both produced and consumed resources, on one-to-one, one-to-many, many-to-one, and many-to-many bases.

As noted above, discrete manufacturing methods can sometimes be modeled, albeit with only a limited degree of accuracy, in such a manner that each produced item stands in a one-to-many relationship with its component sub-assemblies. Thus, drawing from the previous example, a model representing the manufacture of a motorcycle engine may include elements representing that the engine comprises fuel-air, ignition, feedback and lubrication sub-assemblies.

A digital data processing system constructed according to the invention includes the capability to model such an assembly process, while providing the further capability to model those manufacturing processes having many-to-one and many-to-many relations. This capability has proven highly effective in modeling repetitive and process manufactures. A full appreciation of this capability may be understood with reference to the operation of a crude oil refinery.

At least on a basic level, an oil refinery may be viewed as a manufacturing station in which a single consumed resource, crude oil, is processed in such a way as to yield a multitude of final products, including gasoline, motor oil, and a variety of other petrochemical compounds. The relationship between produced goods (gasoline, motor oil, etc.) and the consumed goods (crude oil) is referred to as a many-to-one relationship.

Upon more thorough consideration, it is seen that the operation of an oil refinery is amenable to even more precise representation using a model supporting many-to-many relationships. Indeed, a wide variety resources are consumed in the production of the refinery's petrochemical product line. These consumed resources include crude oil, catalysts, labor, transportation resources, and utilities, among others. Still further scrunity reveals the existence of a number of complex interrelationships between various refinery production lines, e.g., light hydrocarbons fractured from the crude in early stages of manufacture may be burned to provide energy for use in later stages of manufacture.

The invention described herein permits representation of these complex relationships through use of a modeling mechanism which supports many-to-one and many-to-many relationships, as well as the conventional one-to-one and one-to-many relationships.

With this view, the invention provides, in one aspect, a digital data processing apparatus which includes a first input element for inputting digital signals representative of one or more resource elements consumed in a manufacturing process. A second input element accepts digital signals representative of one or more resource elements produced during that process, while a third input element accepts input digital signals representative of manufacturing relations between the consumed and produced resources.

As used herein, a resource is defined as any element with positive or negative value which is required, consumed, or used during a manufacturing process, or which results from, or is produced by, such a process. Examples of resources include materials (e.g., sheet metal, crude oil, etc.), machine hours, labor, utilities, waste, storage space, and tooling.

In a system constructed in accord with the invention, manufacturing relations define how resource elements, both consumed and produced, relate at the operational, planning, and financial levels. For example, in the processing potatoes for use in beet stew, the consumed resources may include whole potatoes, dicing machinery and machine operator time. Here, an operational relation can be established to indicate that in one hour's time the machine operator can dice 10 pounds of potatoes on the dicing machine. From a planning perspective, a relation can be established to indicate that in order to fully utilize the dicing machine during an otherwise unscheduled four hour period, the operator must be free to supervise or run the dicing operation.

As used herein, consumed resources are those which are "input" or consumed by the manufacturing process being modelled. Produced resources are those which are "output" or produced by that process. Stream resources are those that flow from one step in the production process to another.

A digital data processing apparatus of the type described above further includes a production modeling element for generating and storing a production model comprising digital signals representative of manufacturing relations. The production model stores, in digital form, signals defining a production operation, e.g., the making of beef stew, as well as signals defining resources consumed and produced in that operation. A production model typically represents a complete manufacturing process. As noted above, the invention provides the unique capability to represent relationships between the produced and consumed resources on one-to-one, one-to-many, many-to-one, and many-to-many bases.

The aforementioned data processing system further includes an output element for generating output signals representative of at least selected portions of the manufacturing process. Those selected portions might include, for example, cost reports reflecting the expected cost of a production run represented by the model, production schedules reflecting time tables for availability of consumed or produced resources, or inventory tracking reports indicating the location and condition of lots or batches of inventory.

In another aspect, the invention provides a digital data processing apparatus of the type described above in which the third input element includes a task-defining element for accepting input digital signals representative of one or more of the the represented model. According to this aspect of the invention, the production modeling element includes a task-storing element responsive to the task-representative signal for generating and storing digital signals reflecting how the task affects resource consumption and production.

More particularly, the task-storing element generates and stores digital signals representing, with respect to each task, one or more of the following types of information: (i) one or more resource elements consumed during execution of the task, (ii) one or more resource elements produced during execution of the task, (iii) one or more production operations performed during the course of the associated task, and (iv) manufacturing relations between the associated task and zero, one, or more other tasks.

In another aspect, the invention contemplates a digital data processing apparatus of the type described above in which there is provided an input element for accepting a digital signal representative of an amount of one or more resource elements produced by the manufacturing process. According to this aspect, a theoretical consumption element generates a digital signal representative of an amount of one or more resource element that would have to be consumed during the course of the manufacturing process in order to produce the designated amount of the produced resource. For example, in the production of beef stew, an input signal indicating that 100 cases of stew were produced by the modelled process would result in the generation of a signal reflecting that 2400 cans were consumed in the packaging of that stew.

A related aspect of the invention provides a theoretical production element which responds to a signal representative of an amount of a first resource produced by the manufacturing process to generate a digital signal representative of an amount of one or more related resource elements produced during the same production run. For example, in the production of chicken parts, a report reflecting the output of 600 legs, would result in the generation of a signal reflecting the output of three pounds of feathers as a byproduct of the production of those legs.

In another aspect, the invention provides a digital data processing apparatus as described above in which the third input element includes input elements for accepting digital signals representative of temporal or volumetric output of a production run, as well as that of a task associated with the run. A further input element is provided for accepting a conversion factor representing a mathematical relationship between the task and production run output quantities. A task batch is provided for generating a digital signal representative of the number of the task batches required in order to complete the production run. Use of the task batch element facilitates machine operator activity during production runs by eliminating the need to perform constant re-calculations to determine appropriate batch production.

According to another aspect of the invention, a digital data processing apparatus having features of the type described above can include a resource element for generating and storing digital signals representative of a production characteristic associated with at least one resource element in the production model. The production characteristics relate to financial, operational, planning, and tracking aspects of the resource.

By way of example, the system permits resources to be tagged as "balance" or "non-balance"; wherein, a balance resource is one whose on-hand quantity is increased or decreased by use, e.g., sheet metal, screws, or other physical material. A non-balance resource, on the other hand, is one which requires measurement from period to period, but which does not require a balance on hand, e.g., electricity, machine hours, and labor. Other classifications, e.g., "on-hand", "on order", and "work in progress," as well as quality assurance classifications "QC hold," "restricted areas," or "quarantine," among others.

According to yet another aspect of the invention, a computer aided material requirements planning system of the type described above can include a transaction element for modifying digital signals representative of one or more production characteristics associated with a physical occurrence of a resource element. Use of the transaction element enables the system to note the existence of, and track changes in, those occurrences. For example, when a shipment of a resource, e.g., potatoes, arrives at the processing plant, the transaction element is actuated to record to arrival of the shipment. Later, e.g., when the potatoes are moved, diced, quarantined, or otherwise processed, the transaction element can again be actuated to record the nature of the processing activity. In this regard, a physical occurrence of a resource element is defined as the actual or simulated existence of a physical embodiment or amount of those resources. Typically, of course, a physical occurrence of a resource represents a shipment or lot of the resource.

In another aspect, the invention contemplates features for tracking physical occurrences of resource elements, along with identifying quantities of those resources on hand or required for use in production.

Further aspects of the invention provide methods for operating a digital data processing apparatus of the type described above.

The aforementioned and other aspects of the invention are evident in the attached illustrations and detailed description which follows.

Brief Description of the Illustrated Embodiment

A more complete understanding of the invention may be attained by reference to the drawings, in which:

Figure 1 depicts a digital data processing apparatus of the type used to practice the invention;
Figure 2 depicts an overall configuration of elements comprising a preferred computer aided resource planning system constructed in accord with the invention;
Figure 3 depicts a configuration of elements comprising production modeling aspects of a preferred embodiment of the invention;
Figure 4 depicts a configuration of elements comprising a resource management module of a preferred embodiment of the invention; and
Figure 5 depicts an exemplary production model used in the practice of a preferred embodiment of the invention.

Detailed Description of the Illustrated Embodiment

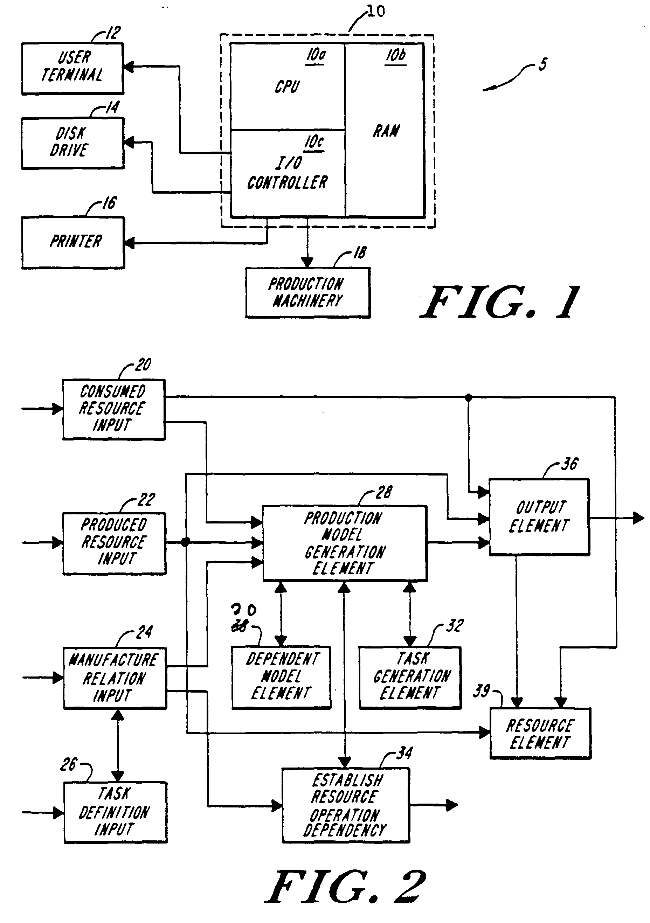

Figure 1 depicts a digital data processing system 5 of the type used in a preferred practice of the invention. The system includes a computer 10, having a central processing unit (CPU) 10a, a random access memory unit (RAM) 10b, and an input/output control unit 10c. The CPU 10a executes computer instructions stored in RAM 10b representing a preferred sequence of digital data processing steps for providing manufacturing process control, as described in greater detail below. The I/O controller 10c provides an interface between the RAM 10b and permanent storage device, e.g., disc drive 14, as well as between the CPU 10a and other peripheral devices, including one or more user terminals 12, and printer 16. As illustrated, the I/O controller 10c may also interface with production machinery 18, e.g., inventory control machinery, production monitoring apparatus, etc., to monitor the operation thereof.

According to a preferred practice, the computer 10 is an IBM System 38 superminicomputer, operating under control of CPF operating system. User terminal 12, disc drive 14, and printer 16 constitute standard peripheral devices provided with the System 38. It will be understood by those skilled in the art that any number of other commercially available computers can also be used to practice the invention.

In a preferred embodiment, the instruction sequence utilized to place the data CPU 10 and related peripherals 12, 14, 16, 18 in a mode for manufacturing process control is functionally arranged in two sections, referred to as the resource processor (or "RP") module and the resource management (or "RM") module. The RP module provides an instruction sequence for placing the digital data processing apparatus 5 in a mode to create production models reflecting relationships between resources used in the manufacturing process. The RM module provides an instruction sequence for placing the apparatus 5 in a mode for characterizing attributes of specific resource elements, or physical occurrences thereof.

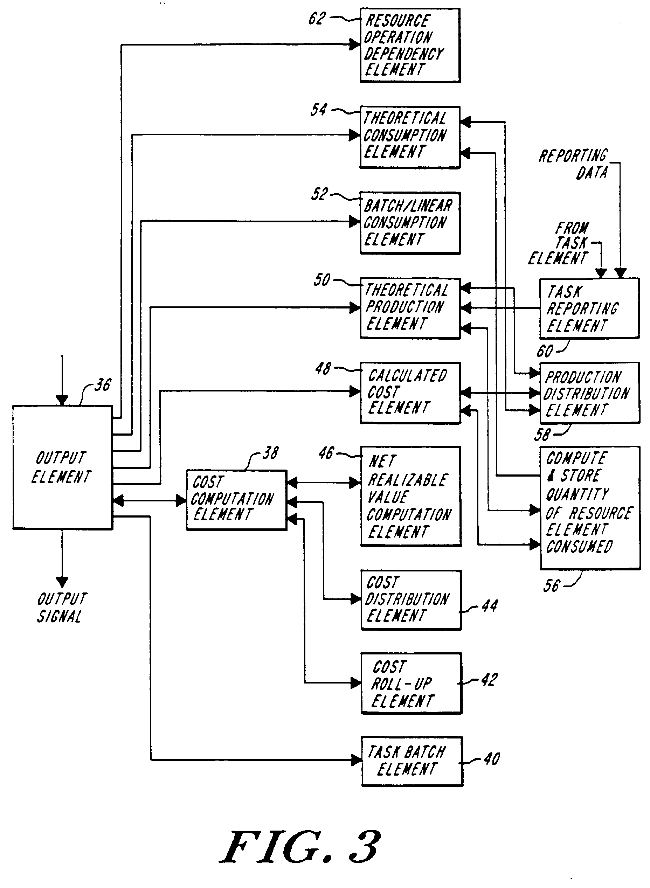

In the resource processor mode, the apparatus 5 generates a production plan or production model ("PM") from one or more inputs representative of material or resources consumed and produced by the modelled process. As discussed with respect to Figure 3, below, the apparatus 5 permits operator review and analysis of these production models, and their underlying production data, via output reports, file lists, as well as via inquiry programs.

In a preferred operating mode, a production model is utilized as a "blueprint" of a production process, reflecting all resources consumed and produced in the process. Each production model typically represents a complete manufacturing process.

For each end product or resource to be manufactured, the illustrated apparatus 5 permits definition of a plurality of production models, such as "live" PM's and financial PM's. A "live" PM is used, for example, to represent processing steps, input resources and products used in an operation being modelled. A financial PM, on the other hand, models operations from a cost information perspective.

The apparatus 5 also utilizes "parent" PM's and "dependent" PM's. A parent PMs is an independent model, capable of standing on its own. A dependent PM mirrors a pre-existing parent PM, but includes various modifications in the underlying model. For example, a parent PM can model a manufacturing process that includes, as a consumed resource, fresh tomatoes. Since the process may also be run with canned tomatoes -- e.g., during the winter months --the apparatus 5 can utilize a dependent PM to mirror the parent PM, replacing the consumed resource "fresh tomatoes" with "canned tomatoes" but keeping the other relationships of the model identical

The apparatus 5 operating in the RP mode creates "master" and "associated" production models. For example, in a manufacturing process for the manufacture of beef stew, a necessary intermediary step is the manufacture of marinade. Here, a master model is utilized to define the steps and resource relationships for producing the stew itself, while an associate model is utilized to define the steps and resource relationships for the beef marinade. In operation, the apparatus opens both master and associated models simultaneously, thus on scheduling and opening the master beef stew production model, the apparatus 5 automatically opens the associated beef marinade production model.

A manufacturing process control apparatus 5 constructed in accord with the invention groups production models with common characteristics using a production model type code. A production model name always appears with its associated type code. For example, a type code assigned to all financial production models may be defined as "FI," while one assigned to all production models related to beef stew production may be defined by a type code of "BS."

Production models created by an apparatus 5 constructed in accord with the invention can be structured a number of ways. Each production model is made up of tasks, those processes that are needed to make a product. Each task may include operations and resources that go into and come out of each operation.

For each production model, the apparatus accepts input, e.g., from user terminal 12, representative of a name, type, description, and batch quantity, associated with the underlying manufacturing process. With respect to batch quantity, for example, the apparatus 5 accepts input representing that the processes which produce 100 cans, gallons, cases, pots, or pounds at the end of this production run. That is, the apparatus permits expression of quantities in units of measure that makes the most sense for each specific step in the underlying production process.

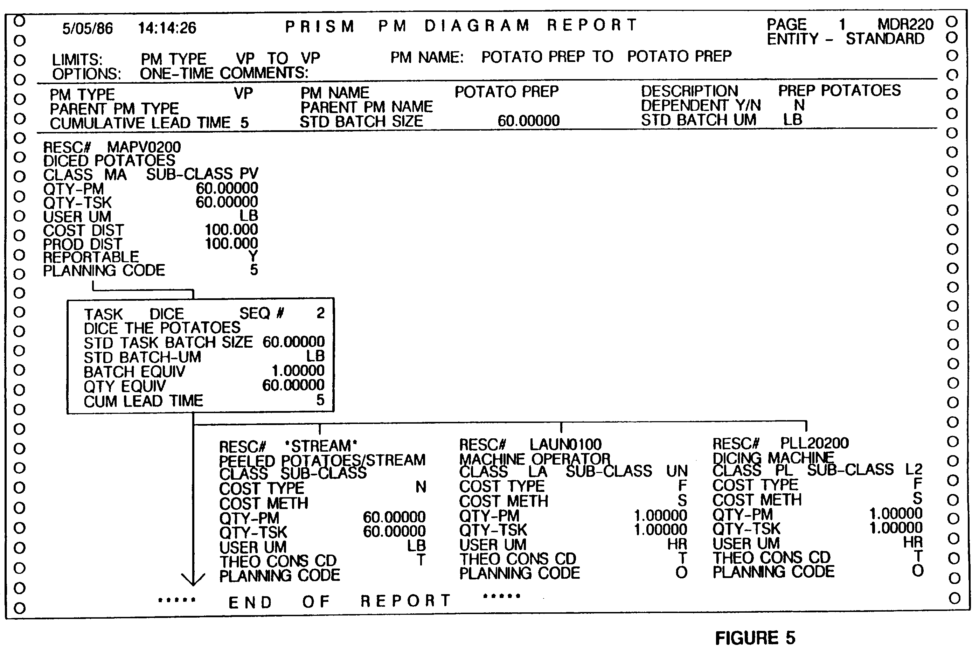

Figure 5 depicts an exemplary production model for the preparation of diced potatoes.

As discussed above, a PM models both the resources and tasks embraced in a manufacturing process. In this regard, tasks describe what steps taken in the process to manufacture the produced resources. In a system constructed and operated according to the invention, tasks required in producing beef stew, for example, can include a task for the preparation of beef and vegetables, as well as additional tasks for cooking, grading, and packaging the intermediary and produced resources.

In the illustrated system, tasks are defined both by their consumed and produced resources. Again, referring to beef stew production, a preparation task might require beef, potatoes, a spice pack, a machine operator (i.e., a labor resource), and a peeling machine (i.e., a plant/equipment resource). Costing and resource report-representative signals generated by the system are conducted at the task level. Accordingly, to track the cost of machine, the illustrated system would include a machine definition (e.g., for a peeling machine) as a consumed resource at the task level.

The illustrated apparatus 5, operating in RP mode, also handles batch consumption of resources. For example, in the modelling of beef stew preparation, if the stew must cook for 8 hours regardless of the quantity of stew in the pot, the cooking time task of the associated PM would be a batch consumption resource, i.e., one associated with the batch rather than the individual ingredients.

In a preferred embodiment, the system tracks a plurality of reportable produced resources, including all by-products, co-products, and waste products. As unsed herein, a by-product is a produced resource having an economic value, but which is produced incidentally, i.e., as a residual product of the main production process. Co-products are end products of relatively equal value, coming out of the same production process. Waste products are useless end products with negative value.

In RP mode, the illustrated apparatus assigns a production distribution percentage to each resource. This indicates how amounts of the resource are used in task. For example, a task to make cardboard boxes and may produce two sizes of boxes, one large and one small. Because it takes more cardboard to produce a large box than it does to make a small box, the production distribution percentage for the large box might be 60 percent, while for the small box it is 40 percent. The sum of the production distribution percentages for all produced resources on each task must equal 100 percent.

A preferred embodiment of the invention permits assignment, e.g., via operator input at user terminal 12, of a cost distribution percentage to each produced resource. This designates how much each resource produced in a task costs. In the above-cited example, more materials are used in producing large boxes, so their cost distribution percentage might be 60 percent, while for the smaller boxes it might be 40 percent. The sum of the cost distribution percentages for all produced resources on each task also must equal 100 percent.

A manufacturing process control system constructed in accord with the invention also allows tracking of produced resources as net realizable value (NRV) resources. In this regard, for example, if a manufacturer produces chicken parts, one resource produced from the final task is chicken feathers. Since these feathers are generally not considered an overly valuable resource, the system does not require an assignent to them of a production or cost distribution percentage. However, as such feathers can be sold, e.g., at a price of $20 a bag, to a local pillow manufacturer, they may be assigned a net realizable value (NRV) of $20 a bag. Preferably, the illustrated apparatus subtracts this from the total cost of producing the production model.

Conversely, the system preferrably permits assignment of NRV to account for the cost of waste products which have disposal costs. In such instances, the net realizable value is added to the overall cost of production associated with the production model.

## Superflushable Resources

The illustrated apparatus 5 operating in RP mode preferrably performs a function called superflushing. It applies to manufactured consumed resources and instructs the system to automatically consume a resource that is produced by one production model but used by still another production model. The system theoretically produces the resource and theoretically consumes resources that go into its production. This procedure, then, takes into account all necessary resources when it performs the superflush.

The illustrated apparatus 5 operating in RP mode allows monitoring and analysis of production yield, based on operated defined expected yield percentages, and deviations thereof, for each task.

A manufacturing process control system constructed in accord with the invention preferrably calculates historical yield percentages. For each task, these include a last complete period average yield, historical average yield, and the last yield. Comparison of the difference between expected and actual historical yields for a task enables further refinement of the PM definition.

The illustrated apparatus 5 operating in RP mode also provides a cost rollup for adding the cost of all consumed resources used in producing a resource. These rollups can be performed on actual or simulated basis. The calculations are identical for the simulated and actual rollup. Report lists output by the system are also identical, with the exception of two additional fields on the simulated report. The actual rollup, however, uses the "real" resource cost and overhead data currently in the system's master files, and updates those files. The simulated rollup uses a "what-if" cost data entered through a simulation file maintenance or simulation file batch update routines.

Figure 2 depicts the structural and functional interrelationship of elements making up the resource processor and resource management modules of a preferred manufacturing process control system constructed in accord with the invention. The modules include a consumed resource input element 20 for inputting digital signals representative of one or more resource elements consumed in the manufacturing process, a produced resource element 22 for inputting digital signals representative of one or more resource elements produced by the manufacturing process, and a manufacturing relation input element 24 for inputting digital signals representative of manufacturing relations associated with the manufacturing process, i.e., between at least one consumed resource and a set of one or more produced resource. Digital signals accepted by each of elements 20, 22, 24 may be input interactively by user terminal 12 or alternatively, from a file on drive 14, as part of a batch mode process.

A production modeling element 28 is coupled, i.e., connected for the transfer of information in the form of digital signals, with aforementioned input elements 20, 22, 24. The production modeling element serves to generate and store a "production model" comprising digital signals representative of manufacturing relations between the consumed and produced resource elements. The element 28 generates signals representing those relations on one-to-one, one-to-many, many-to-one, and many-to-many bases.

An output element 36 is further coupled with the production modeling element 28, as well as with the consumed resource and produced resource input elements 20, 22, for generating output signals representative of at least selected portions of the manufacturing process. Those selected portions, as discussed below, can include portions representative of manufacturing relations associated with the production models.

The illustrated system further includes a task-defining element 26 coupled to the manufacturing relationship input element. The element 26 accepts, e.g., from user terminal 12, digital signals representative of one or more tasks performed during the manufacturing process. The production modeling element 28 is shown to include a task-storing element 32 responsive to the task-representative signal for generating and storing digital signals representative of one or more of the following types of information: (i) one or more resource elements consumed by a task, (ii) one or more resource elements produced by a task, (iii) one or more production operations performed during the course of a task, and (iv) manufacturing relations between the associated task and one or more other tasks.

According to a preferred practice of the invention, the production modeling element 28 includes an element for generating a digital signal indicating that a resource element produced by one task serves as a resource element consumed by the same or another task. This element is used for purposes of modeling resource relationship of the type found where a product produced by a first task is routed to serve as an input to that same task and/or another task.

The production modeling element 28, as illustrated, includes a dependent model generating element 30 for generating a digital signal defining a first production model as a master production model and for defining other production models as being dependent on that master model. A dependent production model is defined as one having the same tasks and produced resource elements as the master production model. The dependent and master production models usually differ from one another with respect to consumed resource elements.

In a preferred embodiment, the production modeling element 28 further includes an element for generating a digital signal representative of a production model type and for associating that production model type-representative signal with the one or more production models. In accord with operations initiated by the user, for example, these type-representative signals are used to identify production models representing manufacturing processes having similar operational, financial, or planning characteristics.

As shown in Figure 3, the illustrated system further includes elements, coupled to the output element 36, for generating digital signals representative of the production, yield, consumption, composition, value, and variances for selected ones of the resource elements. More particularly, the system includes a cost computation element 38 coupled with the output element 36 for generating a digital signal representative of a cost associated with the use of a consumed resource, the production of a produced resource, or the running of a task associated with the production model. The illustrated cost computation element 38 may itself include a cost roll-up element 42 for generating a digital signal representative of a cost roll-up associated with one or more tasks associated with the production model.

In a preferred embodiment, the consumed resource input element 20 may include an element for accepting digital signals representative of costs associated with one or more resource elements consumed in the manufacturing process represented by the production model. As before, signals representative of those costs may be accepted from user terminal 12 or from CPU 10a. In conjunction with the input of of cost-representative signals, the cost computation element 38 may include an element 44 for generating a digital signal representative of a cost distribution associated with each of plural produced resources associated with a task.

With further reference to Figure 3, the illustrated cost computation element 38 may include an element 46 for generating a digital signal representative of a net realizable value of one or more resource elements produced by a selected task.

According to the illustrated embodiment, the produced resource input element 22 includes an element for inputting digital signals representative of amounts of one or more resource elements produced by a manufacturing process represented by a production model, while a theoretical consumption element 54 is coupled with the output element 36 for generating a digital signal representative of an amount of one or more resource elements consumed by the manufacturing process during production of one or more produced resource elements. The theoretical consumption element 54 includes a production distribution element 58 for generating a digital signal representative of a production distribution associated with each of plural resources produced by associated tasks. The output and production distribution elements 36, 58 are also coupled with a theoretical production element 56 selectively operable for generating a digital signal representative of an amount of one or more resource elements produced by the same task.

The manufacturing relation input element 24 further comprises an input section for inputting a digital signal indicating whether quantities of resources produced by a task are reportable. A reportable task element 60, coupled with the element 24 and, more particularly, with the aforementioned input element, provides functionality for selectively enabling the theoretical production element 58 to generate its amount-representative signal and for, alternatively, accepting input digital signals representative of a quantity of one or more resources produced by the task.

A manufacturing relation input element 24 constructed for use in preferred practice of the invention also includes an input section for accepting a digital signal representative of temporal or volumetric output of a production run corresponding to a production model, as well as an input section for inputting a digital signal representative of a temporal or volumetric output of a task batch corresponding to a task associated with that production model. An input section further associated with the manufacturing relation input element 24 serves to input digital signal representative of a mathematical relationship between the production run output and the task batch output. Acting in conjunction with these input sections, the output element 36 includes task batch element 40 for generating a digital signal representative of a number of the task batches required to complete the production run.

In accord with preferred practice, the consumed resource input element 20 still further includes an element for inputting digital signals representative of a type of quantitative relation between a resource element consumed by a task and one or more resources produced by that same task. A batch/linear consumption element 52, coupled with the output element 36, responds to the quantitative relation type-representative signal for selectively generating a digital signal representative of either (i) a linear quantitative relation between the consumed resource and one or more produced resources, or (ii) a step-function relation between the consumed resource and the one or more produced resources.

Wherein a preferred practice calls for the consumed resource input element 20 to include an inventory element for inputting and storing a digital signals representative of a quantity of a physical occurrence of a consumed resource available for use in the manufacturing process, that practice also calls for the theoretical consumption element to include an element for modifying the stored quantity-representative signal to reflect a quantity of the resource element consumed during the manufacturing process. Further in accord with that practice, the output element 36 includes a calculated cost element 48 for generating a digital signal representative of an amount of the resource element consumed by the manufacturing process in the production of the resource element. The calculated cost element 48 generates the aforementioned digital signal without modifying the stored quantity-representative signal, e.g., without making any changes which would otherwise indicate that the inventory of the consumed resource element decreased.

In a preferred practice, the manufacturing relation input element 24 includes an input section for accepting a digital signal representative of a quantity of a resource element consumed in a task, as well as an input section for accepting a digital signal representative of a temporal duration of an operation associated with that same task. Further according to that practice, the output element 36 is coupled to a resource operation dependency element 62 for generating a digital signal establishing a relation between a quantity of the consumed resource element and the temporal duration of the operation. The element 62 is selectively operable for establishing those relations for selected ones of consumed resources and operations.

Referring, again, to Figure 2, the illustrated system is shown to include a resource element 39 coupled with the consumed and produced resource input elements 20, 22, as well as to the output element 36, for generating and storing a digital signal representative of a production characteristic associated with at least one the resource element. As explained above, this production characteristic includes one or more of a financial, operational, planning, and tracking attribute of at least one resource element.

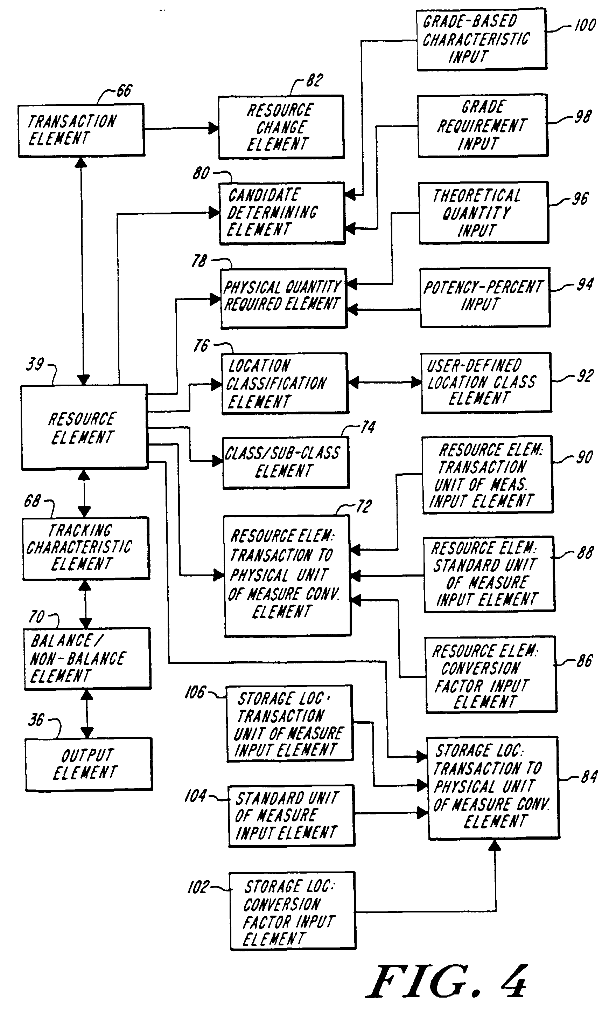

In Figure 4, the resource element 39 is seen to be coupled with a class/sub-class element 74 for generating a digital signal defining one or more resources to have similar production characteristics. The resource element 39 is further shown to be coupled with and include a location classification element 76 for generating a digital signal representing a location classification associated with a physical occurrence of a resource element 39. As noted earlier a location classification includes one or more production characteristics, while a physical occurrence of a resource element is defined as the actual or simulated existence of a physical entity embodying the resource.

Still further, the illustrated resource element 39 includes a transaction element 66 for modifying a digital signal representative of one or more production characteristics associated with a physical occurrence of a resource element 39. The transaction element itself is coupled to a resource change element 82 for modifying a digital signal which represents a physical occurrence of one resource element 39 to represent a physical occurrence of another resource element 39 and for modifying, concurrently, one or more production characteristic-representative signals associated with the modified physical occurrence-representative signal.

The illustrated location classification element 76 includes a user-defined classification element 92 for inputting digital signals representative of user-defined location classification. A user-defined classification change element is coupled to, and acts in conjunction with, the user-defined location classification element 92 for modifying a digital signal representative of a location classification associated with a physical occurrence of a resource element.

With continued reference to Figure 4, a tracking characteristic element 68 is coupled with the resource element 39 for generating a balance/non-balance signal representative of a tracking characteristic of a resource element. A balance/non-balance element 70, coupled to the tracking characteristic element 68 and the output element 36, responds to the balance/non-balance signal for selectively tracking physical occurrences of a resource element.

As shown in the illustration, the illustrated system includes an element 88 for inputting a digital signal representative of a standard unit of measure associated with a resource element. The system also includes an element 90 for inputting a digital signal representative of a transaction unit of measure associated with a physical occurrence of that same resource element. An element 86 is provided for inputting a digital signal representative of factor for converting a quantity associated with a physical occurrence of the resource element between the standard unit of measure associated with that resource and the transaction unit of measure associated with the physical occurrence thereof.

A further element 72 is coupled with the resource element 39, as well as to the input element 86, 88, 90, for inputting a digital signal representative of quantity expressable in the transaction unit of measure associated with a physical occurrence of the resource element and for converting that quantity into a digital signal representative of an equivalent quantity expressable in the standard unit of measure associated with the resource element and for generating a signal representative thereof.

Similarly, a preferred computer aided materials requirements planning system includes an element 104 for inputting digital signals representative of a standard unit of measure associated with a resource element, as well as an element 106 for inputting a digital signal representative of a transaction unit of measure associated with a storage location, which storage location stores a physical occurrence of a resource element. The system further includes an element 102 for inputting a digital signal representative of conversion factor for converting a quantity between the transaction unit of measure associated with the storage location and the standard unit of measure associated with a resource element stored in that storage location.

An element 84, coupled with the resource element 39 and with the input elements 102, 104, 106, inputs a digital signal representative of quantity expressable in the transaction unit of measure and associated with the storage of a physical occurrence of a resource element and converts that quantity into a digital signal representative of an equivalent quantity expressable in the standard unit of measure. The element 84 thereafter generates a signal representative of the converted quantity.

The illustrated system also includes an element 96 for inputting a digital signal representative of a theoretical quantity, at a predetermined potency level, of a consumed resource element required for production of a produced resource element, while illustrated element 94 serves to accept a digital signal representative of a potency-percentage quantity of a physical occurrence of that consumed resource element. An element 78, coupled to the resource element 39 and to the input elements 94, 96 generates a digital signal representative of a physical quantity of a physical occurrence of the consumed resource element required for production. Here, the physical quantity-required signal is expressed in terms of the potency-percentage and is based upon the predetermined potency level.

The system illustrated in Figure 4 also includes an element 98 for inputting a digital signal representative of a grade requirement for a resource element consumed in the manufacturing process. A further element 100 inputs a digital signal representative of a grade-based characteristic of a physical occurrence of the resource element. Candidate-determining element 80 is coupled to resource element 39, as well as to input element 98 and 100, for responding to the grade-requirement signal and to the grade-reporting signal for generating a digital signal indicating whether the physical occurrence of the resource element is candidate for use in the manufacturing process.

The following sections describes the function of the illustrated system 5 operating in resource management (RM) mode. These functions are discussed from the perspective of options available to an operator, or system user, interacting, via user console 12, with a preferred configuration of the system implemented on a digital data processing apparatus of the type described above.

Allocations/Reservations/Picking

There are seven phases in the life of a schedule:

(1) Entry
(2) Open
(3) Launch
(4) Run
(5) Complete
(6) Close
(7) Purge

When a schedule is opened, allocations are created for the resources consumed by the production models run on that schedule. This means the system recognizes that sometime in the future a certain quantity of resource "X" will be needed from a particular warehouse.

When the schedule is launched, reservations are created for the necessary resources at specific locations in the allocation warehouse. Once something is reserved, it cannot be used for another schedule. For example, if there are 100 pounds of carrots at a location, and 70 pounds are reserved for schedule S1, there are only 30 pounds at that location available to be reserved for another schedule.

When making reservations, the illustrated system checks to see that the operator actually has on hand the resources that are needed. The only places where reservations can be created are "on hand" locations. These are locations whose location classifications have a "Y" in an "On Hand" field. As long as the total quantity of a resource the operator needs can be found in on hand locations, the entire quantity is reserved when the schedule is launched. If this is not the case, a report is printed showing the resources for which the operator has shortages.

The illustrated system generates a "Pick List," i.e., a paper copy of operator reservations. This report can be used by warehouse personnel to go out to the specified locations and bring the necessary resources to the production lines. When they do this, the system requires that appropriate transactions be entered indicating that these resources have been used for production. When the first of these transactions is entered, the status of the schedule is set to "RUNNING."

METHODS OF CREATING RESERVATIONS. A user of the illustrated system may often store the same resource in a number of locations. Accordingly, the system provides a method of selecting the locations at which to reserve the resources consumed by the production model. The reservation process has three steps:

Step 1: Eliminate Some Locations. The system selects certain locations and eliminates others from consideration for reservations of the resource. This is done according to specific rules. All reservations are made in the allocation warehouse. In addition, there may be a preferred location specified for the resource on the production model. This location is considered regardless of whether it is one of the locations selected by the picking template.

In response to certain user requests, the system activates picking templates. A picking template determines which locations can be used for a warehouse or a particular production model/warehouse combination. Only one template is used to reserve resources for a given schedule/PM type/PM name combination. If there is a template for the warehouse/PM type/PM name combination, it is used. If not, and there is a general template for the warehouse, then that template is used.

The preferred location of any location included by the picking template may be eliminated for one of these reasons:

(a) Grade. The user specifies the acceptable range of grades for the resource for the production model. In addition, each resource at a location may be assigned a grade level. If the grade of the resource at the location is not within that range, it cannot be reserved for that production model.

(b) Revision Level. Each resource at a location is also assigned a revision level. The user defines the earliest acceptable revision level of a resource in a resource master file. This means that no quantity of the resource with a lower revision level can be used for any production model. If the revision level of this resource at the location is too low, the location is eliminated from consideration.

(c) Expired Shelf Life. A resource can be defined as having a limited shelf life. The user enters a number of shelf life days, and the resource's shelf life is defined to expire that number of days after it is received to any location. If the shelf life has expired at the location being considered, that resource cannot be reserved there.

(d) Location Classification. Resources can only be reserved at "on hand" locations.

Step 2: List or Prioritize the Remaining Locations. The system decides (with operator intervention, e.g., via user console 12) in what order locations that were not eliminated are to be used for creating reservations. The goal of this step is to set up a "priority" system for the locations being considered. Here the user provides input indicating to the illustrated system in what order the user wants to use the locations, in case the user has more of the resource than is required by the production model.

The first location on the list is the preferred location specified with the resource on the production model, if that location is still being considered after the process of elimination described under Step 1. The rest of the available locations are listed in order according to a method specified by the user. The methods for making reservations are as follows:

(a) FIFO (first in, first out). Each resource at a location has a "FIFO date," which is generally the day that resource was received to the location. Using this method, the first location to be used after the preferred location is the one with the earliest FIFO date.

(b) Revision Level/FIFO. This method considers revision level before FIFO date. If the user does keep resources of various revision levels, the user wants to use those with the lowest revision levels first, before they become too out-of-date to use at all. Using this method, the first location on the list (after the preferred location) is the one with the lowest revision level of the resource and the earliest FIFO date (because many locations could have the same revision level).

(c) Lowest Quantity That Meets Requirements. This method is different than the other two in that it is an "elimination" method (similar to Step 1) rather than a "listing" method. It eliminates from consideration any location with a quantity of the resource less than is required for the schedule, except the preferred location.

In the event, for example, the requirement is for 100 units of the resource and the preferred location has 30. The 30 are reserved, so the requirement is 70. The location with the lowest quantity that meets the requirement is used. But if there is no location with the required quantity user input determines which location is used first. For example, the user may specify that the location with the largest quantity is used first. Or alternatively that the location with the smallest quantity is used first.

In a preferred embodiment, each resource at a location also has a picking override sequence number. If the user activates a one-digit picking override sequence field, then this attribute helps to determine which locations for the resource are used first (after the preferred location). When picking override sequences are activated, the FIFO method, for example, becomes the Picking Sequence/FIFO method. Locations with low picking override sequence numbers are used before those with higher numbers. Within a group of locations with the same picking override sequence number, the selected method (FIFO, Revision Level/FIFO, or Lowest Quantity) is used.

Step 3: Create Reservations. Starting with the location at the top of the list, the system reserves the entire available quantity of the resource at each location until it fills the requirement for the task.

Balance/Non-Balance Resources

Each resource on the system must be identified as a "balance" or "non-balance" ("count-up") resource. As a general rule, balance resources are those traditionally considered inventory items, things physically kept in a warehouse. On the other hand, the user may have resources for which the user does not measure a quantity in a warehouse, but that the user wants to track because they do add to the cost of production. These are non-balance resources. For example, labor is a resource but the user does not keep an inventory of it in the same sense that the user might keep an inventory of carrots. Electricity might be a balance resource if, for example, the local utility company restricts the use of it to a certain number of kilowatts per month. Or, it might be non-balance if the user can use an unlimited quantity.

Certain rules apply to the use of non-balance resources:

(1) Non-balance resources cannot be received to locations. This results from their definition as resources not kept in inventory.

(2) A non-balance resource must have a Selected Unit Cost of S (standard cost) and a Cost Rollup Costing Method of S or F (fixed cost from Resource Balance file). This restriction is necessary because other figures, such as rolling average or historical average cost, are continuously recalculated as transactions are entered to receive the resource to a location. Since non-balance resources cannot be stored in locations, these other costs cannot be used.

(3) Both balance and non-balance resources can have records in the Resource Balance file. Of course, most information in that file is not as meaningful for non-balance resources. However, having the Resource Balance record can be useful, for example to keep track of the total quantity consumed.

(4) Non-balance resources are never reserved for schedules, because they are not stored in locations. It is assumed that there is enough of the resource available for any task. The only way to track diminishing availability of a non-balance resource would be to watch the Total Consumption field in the Resource Balance file.

Costs

There are six cost figures available for use in Resource Management. Each of these is stored in a Resource Master or Resource Balance file. In RM and RP modes, the codes for these costs are used for two fields: the Selected Unit Cost for each resource (used in both RM and RP) and the Cost Rollup Costing Method for each resource consumed by a production model.

A - rolling average cost with alpha factor
F - fixed cost
H - historical average cost
L - last period's average cost
R - cost from last rollup
S - standard cost

Costs F and S are user-defined in the resource master file. Costs A and H are continuously recalculated as the user enters transactions for the resource/warehouse combination. Cost L is calculated when the user runs the Period Close program. Cost R exists only for produced resources, and is recalculated each time the user runs an actual cost rollup routine for that resource or its prime costing PM.
The cost rollup costing method, which can be any of the six codes, determines the cost figure used for a resource when rolling up a production model that consumes it. The Selected Unit Cost (A, H, L, or S) determines the cost used for a resource in all situations except cost rollup. For example, the amount of a transaction can default to quantity x selected unit cost. The Resource Valuation Report uses the selected unit cost to show the value of each resource the user has on hand in the warehouses.
Preferred choices for cost figures to use in the fields depend on the characteristics of the manufacturing process being modelled. This section explains the meanings of and calculations for each cost figure, so that the user can differentiate between them and make an informed decision.
**RESMST vs. RESBAL**. The first characteristic to notice is that three costs are from the Resource Master file, and three are from the Resource Balance file. The costs in a RESBAL file are calculated for each resource/warehouse combination, so the user might favor those if the user has widely dispersed warehouses, whose costs are very different.
**Standard Cost (S) and Fixed Cost (F)**. These user-defined cost figures are by definition static, unless the user changes them, whereas the system may change the other costs quite often, depending on the transaction amounts entered. A manufacturing process control system construced in accord with the invention allows the user to define two different constant figures for the same resource so that the user is not forced to use the same one for both the Selected Unit Cost and the Cost Rollup Costing Method.
If the user is confident in the own estimates of the cost of a resource, the advantage of these figures is consistency. One possible disadvantage is that they are stored in a file RESMST, and thus cannot take into account differences between warehouses.
**Cost From Last Rollup (R)**. This code can only be used for a produced resource, and only for the Cost Rollup Costing Method. Thus, the user would assign this code when the user manufactures a resource consumed by another production model. For example, if the user makes the beef broth used in manufacturing beef stew, the user might assign a Cost Rollup Costing Method of R to the broth. The Cost From Last Rollup is stored in the RESBAL file.

**Last Period's Average Cost (L)**. This figure, stored in the RESBAL file and recalculated at the end of each period (when the user runs the Period Close), is the average cost of the resource in this warehouse over the period being closed. Using this cost has real advantages if the user consistently enters actual transaction amounts, because in that case this figure is likely to be more accurate than an estimated cost. If, however, the user frequently lets the transaction amount default to quantity x selected unit cost, some of the benefits may be lost.

**Rolling Average Cost with Alpha Factor (A)**. This figure, stored in the RESBAL file, is recalculated by the system each time a transaction is entered that changes the on order quantity for that resource/warehouse, and for which a transaction amount is entered. The existing Rolling Average Cost and the cost per unit for the current transaction, along with an alpha factor entered by the user, are used to calculate the new Rolling Average Cost, as follows:

$$New Rolling Avg Cost = (current cost \times alpha) + [Old Rolling Avg Cost \times (1 - alpha)]$$

Assuming that .5 is the "alpha" in the above equation, the user can see that an alpha factor of 50 percent gives the two figures equal weight. This means that the new rolling average cost is the average of the current cost and the old rolling average cost. If the user thinks the cost from this transaction is likely to be more trustworthy than the old rolling average cost, the user wants the alpha factor to be more than 50. If the user trusts the old rolling average cost, the user defines an alpha factor less than 50.

The major advantage of the rolling average cost, obviously, is its flexibility, the user specifies exactly how much to "trust" the current transaction amount as opposed to the rolling average cost. To use an extreme example, if the user had a warehouse in a South American country with 500 percent annual inflation, this cost figure would be very useful, with a high alpha factor.

**Historical Average Cost (H)**. This figure, like the rolling average cost with alpha factor, is recalculated with each transaction for the resource/warehouse. It uses the total quantity of the resource in the warehouse, the old historical average cost, and the transaction amount to derive a smoothed average:

$$New Hist Avg = \frac{(Total\ Qty\ Present \times Old\ Hist\ Avg) + Trans\ Amt}{Total\ Qty\ Present + Trans\ Qty}$$

The advantage of this type of "average" is that it always places equal weight on the cost of each unit of the resource for which a transaction has been entered. The top part of the equation represents the total value of the quantity of the resource in the warehouse, and the bottom part represents the total quantity of the resource in the warehouse.

Cycle Counting

Cycle counting is a method of verifying the quantities of resources the user has in the warehouses, without shutting down the plant for days at a time. Using this system, the user counts portions of the inventory regularly, but the user never counts everything at once.

A manufacturing process control system construced in accord with the invention cycle counting allows the user to set up the system once. Then, all the user has to do is print the Cycle Count List on a regular basis, say once a month. The system will tell the user what resources need to be counted, and where. The Cycle Count List shows all resource/warehouse/location combinations that need to be counted this time. It is printed to fit on 8" x 11" paper, so that a warehouse employee can take it with him/her on a clipboard when s/he goes to count the inventory at each place.

After these sheets have been turned in, with the space for actual quantity filled in, the operator uses Cycle Count Entry to tell a preferred manufacturing process control system construced in accord with the invention how many of each resource was actually found at each cycle counted warehouse/location. the final step is to run a Cycle Count Variance Report, which tells the user the difference, in quantity and dollar value, between the expected quantity and the reported quantity (the quantity actually counted) at each location. This dollar variance is one of the Resource Management key indicators.

Preferrably, to set up the cycle counting system, the following factors must be accounted for:

(1) whether cycle count is by location or resource;
(2) how often is each resource to be counted;
(3) what group of resources in each warehouse should be counted every time in order to have a consistent picture of the accuracy of the counts;
(4) whether count locations are a negative quantity of a resource.

If the operator uses the location method, he or she counts all resources in a particular area of a warehouse at once. If the operator uses the resource method, he or she counts all locations for a given resource in a warehouse at once, and the answer to Question 2 determines how often each resource/warehouse is counted.

For example, the user might have quantities of a resource scattered throughout a given warehouse, because different areas are devoted to receiving, inspection, quarantine, and so forth. the user could count by location, so that everything, all resources, in the inspection area are all counted on the same day. On the other hand, the user might want to count all of a given resource in the same day, regardless of location.

If the user plans to use the resource method of cycle counting, the user uses a field called the Cycle Count Method to determine how often each resource/warehouse combination is counted. A default for Cycle Count Method is set by the user. The user can let this default be assigned to all resource/warehouse combinations, or the user can change it for those the user wants to count more or less often than the default. The following are the possible Cycle Count Methods:

(0) monthly;
(1) quarterly;
(2) semi-annually;
(3) annually;
(4) always;
(5) by number of transactions.

Using methods 0-3, the user can cycle count the resources in the warehouses at specific time intervals. A resource/warehouse assigned Cycle Count Method 4 is always counted, as long as it is within the limits selected for the Cycle Count List. Using method 5, the user can cycle count a resource/warehouse at intervals determined by the volume of activity (number of transactions entered) for it.

User specification determines the resource/warehouse combinations in the Cycle Count Control Group. All locations for these combinations are printed on every Cycle Count List, regardless of the limits selected. Because the user counts these resource/warehouses every time, the user can use this "barometer" group to make a judgment about the overall accuracy of each count.

The purpose of the Cycle Control Group is to pinpoint inventory problems. In a preferred embodiment, its members with that goal in mind. The following factors are consiered:

(1) Value
(2) Volume
(3) Volume/value combination
(4) Fluctuation
(5) Whether the resource is normal (in terms of the first four categories)

One way to set up the control group for each warehouse would be to include resources on the extremes of each of the first four categories (very high value, severe fluctuation in inventory level, etc.) plus some more "normal" resources. If the count for the control group resource for category 4 is off, it may be that all resources in that category are likely to have a problem. If the category 2 resource in warehouse A is off, this indiates that the user has a problem with high-volume inventory in that warehouse. The above categories are suggestions, of course. The user is not required to use this method of determining the control group resources, or to use the Cycle Count Control Group at all.

The user determines via input to console 12 whether resources with a negative balance should automatically be selected for cycle counts. If the user answers Y, the system automatically selects a resource/warehouse for cycle counting if any location for that resource/warehouse has an expected quantity less than zero.

This could happen if, for example, the user uses theoretical consumption, and the system cannot find a location with a sufficient quantity of the resource to be theoretically consumed. In that case, the system may create a new location or allow an existing location for the resource to "go negative." This means that the system consumes" the resource from the location even though it knows that the necessary quantity is not really there.

If this happens for a single location and the user appropriately specifies, then the field Selected for Next Cycle Count, in the Resource Balance file, is set to Y for that resource/warehouse. This means that ALL locations for the resource/warehouse combination are selected for cycle counting, regardless of whether their regular schedule says it is time to do so. This is probably a good idea, since a negative balance is definitely incorrect: the user cannot physically have less than zero of something.

Defaults

Many entry fields in a preferred manufacturing process control system constructed in accord with the invention have "default" responses. A default is the response used by the system when the operator does not make an entry in that field, or when for some other reason the system does not find a piece of information in the expected place. In some cases, the default for a field may have a set value. Usually, however, when the system needs a value for a field that defaults and does not find it, it looks to the next more general file for a default response.

For example, if no planner number is entered for a resource in Resource Master Maintenance, the system uses the planner number defined for the sub-class (class/sub-class combination) to which that resource belongs. If no planner number was defined for that sub-class, it uses the planner number entered for the class to which that resource belongs.

The set default value or the file from which the default is taken is also listed. The entry for "Planner Number" says, "Default from Resource Sub-Class (RESUBC) file loaded." This tells the user that if it does not make an entry for Planner Number for the resource, the default response is the planner number for the resource's sub-class, and this default response is loaded into the file.

When a value is "loaded into" a file it means that that field now has a fixed value, and does not change when the default changes. Suppose the planner number for a certain sub-class is 45. The user adds a resource that belongs to that sub-class, and the user does not enter a planner number. The default value, 45, is "loaded into" the Resource Master file record for that resource. Suppose the user then changes the planner number for the sub-class from 45 to 50. Because the value was loaded into the Resource Master file, the planner number for the resource is still 45.

On the other hand, if a default is NOT loaded into the file, the field's value can change when the default changes. Suppose the user defines a resource class with a Cost Rollup Type Code of F. the user then uses Resource Sub-Class Maintenance to add a sub-class within that class (sub-classes are identified by class/sub-class combinations). When the user displays the data screen, the default value, F, is displayed in the Cost Rollup Type Code field.

If the user changes it to N, for example, that new value is loaded into the file, and does not change when the code for the resource class changes. Suppose instead that the user decides to use the default. Later, the user changes the Cost Rollup Type Code for the class to V. When the user does so, the Cost Rollup Type Code for that sub-class also changes to V, because the default was not loaded into the file.

Grades/Revision Levels

GRADE. The grade of a resource is a quality rating. For each resource consumed by a production model, the user can specify a range of acceptable grades. Suppose the user grades all beans received from vendors with a number between 1 (worst) and 3 (best). When making cans of beans, the user wants to use only grade 3 beans, but when making vegetable soup any grade is acceptable.

The user can define these limitations in the production models for canned beans and vegetable soup, so that when the system creates reservations for the consumed beans, it skips over any location where it finds beans whose grade is not within the limits. The user can use the Valid Grade Report to see for a resource the locations where it is found, the grade at each location, and the schedules that need the resource. This allows the user to decide specifically which location/grade to use for each schedule.

If the user normally uses a word other than "grade" for the same concept, and would prefer using another term, the user can define a variable heading for "grade" (see tailoring question #V2). The word or phrase the user specifies is then used in place of the word "grade" on report headings, the report prompter screens, and most entry and inquiry screens.

REVISION LEVEL. A "revision level" in a preferred manufacturing process control system constructed in accord with the invention is what the user may know at the "engineering change (EC) level" of the resource. This characteristic, a two-character field, indicates which version of the design was used to manufacture this supply of the resource. Suppose the original design for resource A was revision level 01. Since then, the user has been through revision levels 02, 03, 04, and are now using 05. Revision levels of 01 and 02 are so out of date that the user no longer uses them.

In Resource Master Maintenance, the user can define the Earliest Acceptable Revision Level for resource A to be 03. Then, when the system creates reservations for resource A, it skips over any location where it finds resource A with revision level 01 or 02. In addition, the Invalid Revision Level Report identifies locations that contain resources with unacceptable revision levels.

Each resource in a location can be assigned a grade and a revision level. The entire quantity of the resource at a single location must have ONE grade and ONE revision level. So, when the user moves a resource from one location to another, the grade or revision level assigned to it sometimes changes.

On the other hand, varying grades and revision levels of the same resource can exist in different locations.

As mentioned above, the system skips over a location where the resource has an unacceptable grade or revision level. The revision level can be a part of the method of creating reservations. This ensures that resources with earlier but still acceptable revision levels are used first, before they also become out of date.

Key Indicators

For each module in a preferred manufacturing process control system constructed in accord with the invention, certain "key indicators" are defined. A key indicator is an important quantity or amount that the user may want to analyze over time, such as the quantity of a resource produced or total dollar value of inventory at the end of each period.

Each time the system generates a figure considered to be a key indicator, it is stored in a Key Indicator file, KEYIND. There are options in the Foundation module allowing the user to change some of this information (for example to round off the figures), enter a user-defined term for each key indicator, or download the collected key indicators to a PC spreadsheet application.

Below is a list of all key indicators defined in a preferred embodiment of the resource management module. Key Indicators #1-14 are calculated at actual Period Close (see Sectin 9-2), and Key Indicator #15 is calculated by the Cycle Count Variance Report.

**Key Indicator No. 1: Ending Inventory $ Value**

Period Close updates the Key Indicator file with the ending inventory amount for each warehouse and resource class/sub-class combination.

The system calculates the total quantity of each resource the user has in locations whose location classifications have a Y in the $ Value Inventory field. This quantity is multiplied by the selected unit cost for the resource.

**Key Indicator No. 2: Average Inventory $ Value**

This is the average dollar value of inventory the user has on hand at the end of each period, by warehouse and resource class/sub-class combination.

The system calculates the total quantity of each resource the user has in on hand locations. The dollar value of this period's ending inventory is this quantity multiplied by the selected unit cost for the resource. The new Average Inventory $ is this figure averaged with the same figure from the previous period.

**Key Indicator No. 3: Inventory Turns, Actual Inventory**

Actual Inventory Turns is the number of periods that the resources the user has in on hand locations at the end of this period could be expected to last. This figure is calculated using the Period Demand Quantity for each resource/warehouse combination.

**Key Indicator No. 4: Inventory Turns, Average Inventory**

This is the number of periods that the quantity of resources the user normally has on hand locations at the end of a period could be expected to last. The Average Inventory Turns iscalculated for each warehouse and resource class/sub-class combination.

**Key Indicator No. 5: Units Produced**

This is the total quantity of each resource, resource class, and resource sub-class produced during the period. The totals for class and sub-class are calculated in the standard unit of measure for each resource class.

**Key Indicator No. 6: Number of PMs Used in Production That Are Not Prime Planning PMs**

This is the total number of production models that exist on the system and that are not the prime planning PM for any resource.

**Key Indicator No. 7: Periods On Hand $ Value**

For each resource/warehouse combination, the ending quantity on hand (quantity of the resource in on hand locations at the end of the period) is divided by the Period Demand Quantity defined in the Resource Balance file. This is the number of periods that the present on hand inventory of the resource could be expected to last.

In addition, the total dollar value of this quantity is calculated for each resource class and sub-class.

**Key Indicator No. 8: $ Value of Non-Plan Resources**

This is the total dollar value of resources stored in locations considered unavailable for planning. These are locations whose classifications have a zero in the Planning Availability field. This total is stored in the Key Indicator file for each resource class and sub-class.

**Key Indicator No. 9: $ Value of Accruals for the Period**

At the end of the period, the system calculates the total dollar amount of transactions that would normally have transaction amounts entered (receipts from vendors, for example) but did not. The accrued value is considered to be the transaction quantity in the standard UN for the resource multiplied by its selected unit cost.

**Key Indicator No. 10: Longest Cumulative Lead Time**

This is the longest cumulative lead time for any production model on the system. The cumulative lead time is the number of days it takes to produce the final products, from the earliest day the user would need to order a consumed resource in order to have it in time for the start date of the task that consumes it. Cumulative lead time for a master PM also includes the cumulative lead time for any associated PMs.

**Key Indicator No. 11: Number of PMs Flagged for Recosting**

This is the total number of production models defined in RP for which the Recast field is Y. This field is changed back to N when the user runs the Cost Rollup program for the production model.

**Key Indicator No. 12: $ Value Transactions by Detail Code**

This is the total dollar value of all transactions during the period, calculated for each transaction/transaction detail code combination.

**Key Indicator No. 13: $ Value Inactive Resources**

This is the total dollar value (quantity in standard UM times selected unit cost) of all resources that have not moved in the last 9 months.

**Key Indicator No. 14: $ Value Safety Stock**

Far each resource/warehouse combination, the user can define a Safety Stock quantity in the Resource Balance file. This key indicator is the total value of all the safety stack: the Safety Stock quantity for each resource/warehouse combination, multiplied by the selected unit cost for that resource.

**Key Indicator No. 15: Cycle Count Quantity Accuracy %**

The Quantity Accuracy percentage is calculated by the Cycle Count Variance Report, when the user uses it to update the files with new inventory counts. This is the percentage accuracy, in terms of quantity (as opposed to dollar value), for records updated with this run of the report. Therefore, if the user only wants one figure updated for each cycle count, do not update the user's files until all records in the file have reported quantities and the user is ready to update ALL of them.

Location Classifications

The user may be accustomed to software systems that "classify" locations for the user -- dock, inspection, stock, and so forth. Even the most carefully designed "canned" classifications, however, are rarely as numerous as the actual situations in the plant. Their characteristics are predefined, allowing for no "ifs, ands, or buts."

Both of these problems are eliminated in a preferred manufacturing process control system constructed in accord with the invention. Using this system, the user can define an unlimited number of location classifications, and the user decides the meaning of each one.

To each warehouse/location/resource combination in the system the user can assign a location classification code. This code determines a number of the characteristics of the resource at that location. Some, but not all, of these characteristics are described below.

All resources in locations on the system are defined to be "on hand" inventory, "on order" inventory, or neither (never both). This classifies the various quantities of each resource that the user has in the operator's warehouse(s), so that the system can perform certain calculations, create reservations, and so on.

"On hand" means that the resources in the location classification are immediately available for production. Only resources in "on hand" location classifications can be reserved for schedules.

"On order" means that the resources cannot be used for production immediately, but they definitely exist. The user is fairly certain that at some future time they will become available. the user might define inspection as an "on order" classification, for example. Resources being inspected are not available for use, but they will be after they have passed the operator's quality tests.

A location classification can also be defined as neither on hand nor on order. This is another possibility the user may consider for inspection locations. Resources being inspected are definitely not available for use, so they are not on hand. Since the user has definitely received them, the user may not consider them on order. On the other hand, if they fail inspection the user may decide to send them back to the production line or back to a vendor. For this reason the user may decide that they are on order.

Another characteristic determined by location classification is Planning Availability, that is whether resources in the classification should be considered in a Planning module planning run. This one-digit field in Location Classification Maintenance can be 2 (always available for planning), 1 (available for planning at ETD date), or 0 (never available for planning).

A two (2) means that resources in the location classification should always be considered available for planning, from the moment they enter that classification. For example, most users will have a location classification for resources that are simply in stock, ready for use. Such a classification would probably have a two in the Planning Availability field.

A one (1) means that resources in the classification should only be considered after a certain period of time. Suppose the user has an "in transit" location classification. the policy is to "receive" resources to this classification when the user knows that the user will physically receive them within 10 days. A planning run should not consider these resources immediately available. But when it starts planning production 10 or more days ahead, the user might want these resources to be counted as available, because by then the user should have them.

A zero (0) means that the resources should never be considered in planning. An inspection classification, for example, could have Planning Availability zero.

The resources at a location acquire some of their characteristics from the location classification. Thus, these characteristics change when the resource changes classification. When a resource moves from an "on order" location to an "on hand" classification, the dollar value of resources on order decreases, and the dollar value of on hand inventory increases.

**Change Classification Transactions**. Suppose the user is finished inspecting a resource, and it is now available for further use. Normally, to give a software system this information, the user would enter a transaction moving the resource from a location whose classification is "inspection" to one whose classification is "available." However, this can be done in a preferred manufacturing process control system constructed in accord with the invention.

If a "resource" is an airplane, for example, the operator is probably not actually moving it to a new location. the user wants just to change the location classification of the resource at its current location. In a preferred manufacturing process control system constructed in accord with the invention, the user can do this too. Such "change classification" transactions are user-defined (see Transactions, below).

Lot Control

The complete and accurate lot control information provided by a preferred manufacturing process control system constructed in accord with the invention requires that the user performs a few simple procedures to set up the control process. For each resource on the system that needs to be lot-controlled, a "Y" is entered in the lot control field on the appropriate data screen the maintenance program. Then, the location classifications that require lot numbers through location classification maintenance must be defined. An "in transit" location classification, for example, would not require lot information, since at that point the user has not yet received the materials.

When receiving a resource to a location, the user is required to enter a lot number if and only if both Lot Control fields are Y. The resource must be a lot control resource, AND the location to which the user is receiving it must have a location classification that requires lot control. This way, the user is not forced to enter lot control information unless it is necessary.

A preferred manufacturing process control system constructed in accord with the invention also provides for accuracy and consistency in lot number entry, through system-generated lot numbers. If the user answers Y to tailoring question #T2, the system will generate lot numbers for the user. The user determines the information included in the lot number, by answering tailoring question #T3.

Periods/Period Close

Periods in a preferred manufacturing process control system constructed in accord with the invention are identified by year/period combinations. For example, suppose the business year consists of 13 four-week periods. The first period of the year 1988 would be year/period 88/01, the second would be 88/02, and so on. In tailoring questions #Y1-2, the user defines the current year/period.

With each transaction performed, the user is asked to enter a year and period number. This information, rather than the date of the transaction, determines the period against which the production or consumption of a resource is entered. Certain other RM programs, for example the schedule purge, also requires the user to define the year/period when the activity took place.

When the user enters a year/period, the system checks to be sure that the combination has not already been closed by a preferred manufacturing process control system constructed in accord with the invention. Suppose the user installs a preferred manufacturing process control system constructed in accord with the invention during year/period 88/02, and the user uses the system to close periods 88/03, 88/04, and 88/05. If the user then enters year/period 88/08, for example, the system will not correct the user. It only checks the year/period entered against the year/periods closed by the system. It does not check to see if the year/period entered is before the first period closed using this system.

A period is said to be "closed" after the user runs an actual Period Close for it. Period Close calculates the cost of each resource during the period, quantity and yield figures for the production models and standard tasks for the period, and some or all of the Period Close key indicators.

The user can use the Period Close program to run either a "simulated" or an "actual" close. The simulated close allows the user to see what results the user would get if the user ran the actual close. the user might do this in the middle of a period, for example, to see what the end-of-period numbers are going to be like. The actual period close updates the necessary files in RM and RP with the calculated costs and yields. The simulated close does not update those files.

A RM Tailoring file, TALFLI, contains the year/period combination most recently closed. This is displayed on the Year/Period Question Screen in System Tailoring, in fields labelled "Last Actual Year Closed" and "Last Actual Period Closed."

When the user first installs RM, the "Last Actual Year Closed" and "Last Actual Period Closed" are both 00 (zero). The first time the user runs an actual close, the system allows the user to close the current period defined in #Y1-2. So, if the system is installed, for example, during the fourth period of 1988, it can use 88/04 as the first close.

When this happens, the "Last Actual Year Closed" becomes 88 and the "Last Actual Period Closed" becomes 04. After this first close, a period can be closed only if the one immediately before it has already been closed. This is because the results of one period depend for their calculations on the results from the previous period. In the above example, if the business year has more than four periods, the second actual close must be for year/period 88/05. If it has exactly four periods, the second close must be for 89/01.

The tailoring file also contains the current year/period, as specified by the user. These are used as the default when the user needs to enter year/period, for example with transactions. If the user has just closed the current year/period, 88/05, for example, the Last Actual Year/Period fields are updated, but #Y1-2 remain 88/05. This is because the user may have a number of "open" periods at once.

Suppose the "current" period is 88/05. The two previous periods, 88/03 and 88/04, have not yet been closed. Now the user closes 88/03: the user does not want questions #Y1-2 changed to 88/03, because the "current" period is still 88/05. For this reason, any change to those questions must be made manually.

Potency

The user may have resources of varying strengths, such as chemical solutions. In a preferred manufacturing process control system constructed in accord with the invention, the user defines a resource as a "potent resource" (one requiring a potency factor) by entering Y in the Potent Resource field in the resource master maintenance routine.

When receiving a resource to a location, the user defines the potency of the resource at that location. If it is a potent resource (if the Potent Resource field in Resource Master is Y), the user must enter a potency factor greater than zero. If it is not a potent resource (if the Potent Resource field in N), the Potency Factor must be zero.

The entire quantity of a resource at a location can have only ONE potency. So, if the user has two containers with different strengths of the same solution, the user probably wants to put them in different locations, even if that means placing them right next to each other and creating a new location for the second container.

The user can have the potency information default. Resource Class Maintenance includes Potent Resource and Potency Factor fields. The Potent Resource field indicates whether the resources in that class are generally potent resources (resources with potency factors). If that field is Y, the user can enter a Potency Factor, which is the default percentage for resources in that class.

These fields are also found in Resource Sub-Class Maintenance, and default to the values from the class to which the sub-class belongs. In resource master maintenance, these fields default to the values from the Resource Sub-Class file. When the user is receiving a potent resource to a new location, the Potency field defaults to the value from the Resource Master file for the resource being received.

From the potency factor, the system calculates the number of "potent units" of the resource. If the user has 20 gallons of a 10 percent solution, there are two gallons of "potent units" of the resource. If the user has 100 gallons of a 25 percent solution, there are 25 "potent gallons." When a potent resource is consumed by a task on a production model, the user must express the quantity in potent units. When it is <u>produced</u>, however, when the user enters a PR transaction, the user must express it in <u>physical</u> units.

For each resource at a location, the system stores quantity information in two forms:

Quantity at Location - quantity in the standard unit of measure for the resource.
Quantity in Last Received UM - quantity at that location in the unit of measure used the last time that resource was received to that location.

The user can see this information by printing a Location Detail Report or using the Location Detail Inquiry.

The system distinguishes between "physical" units and "potent" units of a resource at a location. In some situations, such as receiving, it is easier to enter the physical quantity of the resource. At other times, the user will want to know the quantity in potent units. To make this possible, the Quantity in Last Received UM is stored in physical units of the resource, and the Quantity at Location is in potent units.

Suppose the user receives 20 gallons of a 10 percent solution to a location that does not already contain that resource. Its standard unit of measure is pounds, and one gallon of it weighs two pounds. The Quantity in Last Received UM is 20 gallons, and the Quantity at Location in four pounds. This is because twenty gallons of a 10 percent solution is two potent gallons. Two gallons of this resource weigh four pounds.

In instances where the location already contains 40 gallons of a five percent solution of the same resource, when the operator first attempts to enter the transaction placing two quantities of different potencies in the same location, a message is displayed, warning the user of this situation. If it overrides the warning and puts the two together, the system assumes that the two quantities were combined in one vessel, so that the user now has 60 gallons of a 6.7 percent solution.

When using potent resources, be very careful of the locations. A Location Detail record can exist for a resource/warehouse/location combination, but have a quantity of zero of that resource.

When this happens for potent resources, the default potency at that location is still the potency of the resource from the last time the location has a quantity of it. If the user enters a transaction receiving the potent resource to this existing (empty) location, and the user allows the potency factor to default, the user may end up with a different potency recorded at that location than the user really intended. To avoid this, do one or more of the following:

(1) Run the Purge Empty Locations program fairly often, to remove the empty locations for potent resources.
(2) Discourage operators from allowing potency factors to default.
(3) Make a habit of using the Verify field. This way, if an operator allows the potency to default, that default will be displayed before the transaction is added to the batch. The operator will notice the incorrect potency and enter the correct figure.

Resources/Classes/Sub-Classes

Resource classes and sub-classes provide a method of categorizing the resources on the system. The user must assign a resource class and sub-class to each resource the user define. For example, the user might want to have a class for "packaging materials" and have sub-classes within that class such as "paper" and "aluminum." The user can divide a class called "labor" into "skilled" and "unskilled." As a food processor, the user might define a class for "ingredients" and divide it into sub-classes "spices," "fresh vegetables," "dairy products," and so on.

Try to group together resources that share important characteristics. Creating meaningful categories of resources is useful for several purposes:

(1) Using default field values. A field in the Resource Class file (RECLAS) provides the default value for the same field in the Resource Sub-Class file (RESUBC). Similarly, the value of a field in the Resource Sub-Class file is the default for the same field in the Resource Master file (RESMST). This can save the user keying time when setting up the database.

(2) Categorizing information. Many reports in RM can be limited by class and sub-class and/or printed in class/sub-class sequence. The limits make it possible to see data for a specific category of resource quickly and easily. The sequences allow the user, for example, to keep all information on utilities together. In addition, the Cost Rollup Report in Resource Processor can be used to give production costs by class and sub-class.

Schedules

Schedules in a preferred manufacturing process control system constructed in accord with the invention are the method of recording information about how many of which products the user intends to manufacture, and when. The life cycle of a schedule has seven phases:

(1) Entry
(2) Open
(3) Launch
(4) Run
(5) Complete
(6) Close
(7) Purge

**ENTRY** and **OPEN** are separate steps only for users with RP installed and interfaced to RM. If this is the case, the user normally uses Schedule Entry to enter basic information about the operator's manufacturing plans -- which production models (defined in RP) the user intends to run, the total quantity the user wants to produce from each, the due date of each run of a PM, and so forth.

Like purchase orders, schedules in a preferred manufacturing process control system constructed in accord with the invention can have multiple releases, each with a different due date. If the user wants to make 1000 cases of beef stew this week, 1500 next week, and 1200 the next, the user can record this by defining multiple releases of the same production model. An entered schedule is simply stored in the Schedule Entry (SCEFIL) file: it has no effect on the resource balances, the time available on various machines, and so forth.

**OPEN**. It is when the user OPEN's the schedule, using Schedule open that allocations are created for the resources consumed by the production models on that schedule. This means the system recognizes that sometime in the future the user will need a certain quantity of resource X from a particular warehouse. The Schedule Open program also calculates the start and due dates for each task and the expected quantity of each produced resource.

To make these calculations, the Schedule Open program copies records from the user's RP files so that is knows all the information for each PM running on each schedule. The files where these are stored in RM contain very similar information to the RP files, except that it is all associated with the particular schedule release.

The system is structured this way so that the user can use Schedule Maintenance to make a change to a production model on a particular schedule release, without having that change affect the "blueprint" production model, theone defined in RP. In addition, a change made to the "blueprint" PM does NOT affect the PM on an OPEN release.

The user can also use Schedule Maintenance to add new schedules, or to add production models or releases to existing schedules. If the user has RP installed, do not use this method unless the production model is one the user is certain the user will never use again. Because the production model information is not saved in the user's RP files, to use it again the user would have to re-enter the entire PM.

Users without RP installed MUST use Schedule Maintenance to enter schedules. This requires entering complete production model information with each schedule release. To calculate task dates and resource quanitites, a non-RP user then runs Adjust Allocations. The Adjust Allocations program does not copy records from RP, because they do not exist.

**LAUNCH**. When a schedule is launched, reservations are created for the necessary resources at specific locations in the allocation warehouse. Once something is reserved, it cannot be moved from that location or used for another schedule. For example, if there are 100 pounds of carrots at a location, and 70 pounds are reserved for schedule S1, there are only 30 pounds at that location available to be reserved for another schedule.

**RUN**. This is the phase when the user is actually making the products specified on the schedule. A schedule release changes status from LAUNCHED to RUNNING when the user enters the first transaction for it, issuing consumed resources to or receiving produced resources from a task.

On the production floor, the user physically brings all the consumed resources to the appropriate work centers. What the user tells the system, however, may be slightly different. The user may have a resource that the user uses for many production models and that is too inexpensive to bother counting individually, for example screws. Also, the user may have resources the user does not need to count, because the user can estimate the number the user used fairly accurately based on the quantity of resources produced. For example, the user might be confident that if 1000 cans of beef stew are reported produced, the user used about 1000 cans.

A resource the user tracks very carefully, assigning a specific quantity to a task on a particular schedule, has a theoretical consumption code of D (direct issue). Reservations are created for these resources. To tell the system that the user has brought this consumed resource from the warehouse to the production floor, the user enters a DI (direct issue) transaction.

A numerous and inexpensive resource (screws in the above example) would have a theoretical consumption code of C (calculated cost). Reservations are NOT created for these resources, because their use is not specifically connected to particular schedules. When the user brings a barrel of screws to the production floor, the user enters an IP (issue to production) transaction. When produced resources are reported for a task tha consumes screws, the system generates CC (calculated cost) transactions for the appropriate quantity of screws. The IP transaction reduces the quantity of screws in the warehouse. The CC transaction "issues" the screws to the task.

A resource like the cans of beef stew would have a theoretical consumption code of T (theoretical consumption). Reservations are created for these resources. (If the cans are constantly being delivered via conveyor belt, for example, the user could define a dummy location for the conveyor belt.) the user does not need to issue these resources at all. When the user reports produced resources from a task that consumes the cans, the system generates TC (theoretical consumption) transactions for the appropriate quantity of the theoretically consumed resource.

To report produced resources from a task, enter ON (ongoing production) transactions for stream resources and PR (production receipt) transactions for non-stream produced resources. The user does not need to report the entire quantity of a produced resource at once. However, when the last of the produced resource(s) is received from a task, the user must mark that task as complete by entering Y in the Comp Tasks field. If the user forgets to do this, the user can enter a PR or ON transaction for a quantity of zero, just to set the Comp Tasks field to Y.

**COMPLETE**. When all tasks on a schedule release are complete and after all transactions for that release have been updated, the user runs Schedule Completion for that release. At this point any outstanding reservations, quantities of a resource reserved but never used, are deleted by the system.

When the status of a schedule release is complete, the only transactions that can be entered against it are RA (resource adjustment) transactions. the user would use an RA transaction to correct the resource quantities for a completed schedule, for example if after running that program the user discovers that 10 more cases of beef stew were produced but not reported.

**CLOSE**. When all transactions for a schedule release have been updated (this includes any RA transactions), the user can close it. This status is an important intermediate step between complete and purged: only closed schedules can be purged, and the Schedule Purge program updates the user quantity and yield statistics. If the user finds that the user needs to enter an RA transaction against a closed schedule, the Schedule Maintenance selection screen includes a command key to change it back to status complete. RN transactions can be entered against a schedule whose status is COMPLETE.

**PURGE**. Finally, closed schedule releases are purged. This procedure sends certain information for the schedule release to the Schedule History (SCHHIS) file, and removes the release from all other RM schedule files. The system uses the actual results from this run of the production model to update its quantity and yield statistics, provided that the user is using a production model defined in RP and that this schedule release is linked to RP (see the Link to Resource Processor field on the Schedule Summary Maintenance Screen in Schedule Maintenance).

Shelf Life

If the user uses resources that have limited shelf lives, the user can use a preferred manufacturing process control system constructed in accord with the invention to track that information. Each resource class, resource subclass, and resource has two fields associated with it. A shelf life code indicates whether the resource has a limited shelf life. If so, a Shelf Life Days field defines the length of that shelf life. This figure is the number of days after a quantity of the resource is received to a location that its shelf life expires. The Shelf Life Report lists the locations where resources have reached or are close to their expiration dates.

Each record (warehouse/location/resource combination) in the Location Detail (LOCDTL) file has a Shelf Life Date associated with it. The shelf life date is generally defined to be the date the resource is received to the location, plus the number of shelf life days (always CALENDAR, not WORK, days).

It may be that some resources can be reinspected after their expiration dates. If the resource at a particular location is still usable, the user needs to change the shelf life date for that warehouse/location/resource, to the date it will need to be inspected again if it still has not been used. the user can do this through Location Detail Maintenance.

When the user is entering transactions, the system may sometimes have to decide what shelf life date to assign to a location. Suppose the user has 30 pounds of fresh carrots at location A, with a shelf life date of 123086. On 122986 the user receives 20 more pounds of carrots from a vendor, and place them in the same location. Each warehouse/location/resource combination can have exactly ONE shelf life date, so the whole 50 pounds must be assigned a single date. In this situation, tailoring question #T27 determines whether the shelf life date is still 123086, or 122986 plus the number of shelf life days. Tailoring questions #T28-29 determine the shelf life date in other unusual situations.

Shelf life date is used in a number of ways, for example to eliminate locations when creating reservations (see Allocations/Reservations/Picking). Reservations cannot be created at locations where the resource's shelf life has already expired. In addition, operators can be prevented from issuing expired resources to a task. However, the system does NOT necessarily reject locations where the resource's shelf life has not yet expired but WILL expire by the starting date for the task that consumes it.

Superflush

"Superflushing" is a more sophisticated form of theoretical consumption, which allows the user automatically to consume a resource directly from the production model that produces it. Suppose the user has a PM for beef stew, composed, for simplicity, of beef broth and potatoes. The Beef Broth is a manufactured resource produced by the PM Broth Prep.

```
    PM: Beef Stew


                       Beef Stew
                           |
                         Cook
                           |
              _____
              |                                 |
        Beef Broth                         Potatoes
```

In order to "superflush" the beef broth, several requirements must be met:

(1) The prime planning PM for the consumed resource (beef broth) must exist on the same schedule and with the same release number.

(2) For the prime planning PM, Broth Prep, to be superflishable, it must have the resource being superflushed (Beef Broth) as its only produced non-stream resource, and the resource must be non-reportable. Other stream resources, however, are allowed. The PM diagram, then, might look like this:

**PM Broth Prep**

```
                          Beef Broth
                              |
                           Simmer
                              |
                 _____
                 |            |             |
             Bouillon       Water       Potatoes
```

A resource must be non-reportable to be theoretically produced. But the task resource rules normally require that every task, including the final task, have at least one reportable produced resource. When the non-reportable produced resource is the FIRST produced research the user defines, the system immediately assumes that the user is defining a superflushable PM, and prevents the user from entering any further produced resources for it.

(3) The production distribution percentage for the superflushable produced resource must be 100 percent, verifying that it is the ONLY produced resource. Always enter this on the Distribution % Screen rather than the Resource Maintenance Screen.

(4) Make sure that the end PM (Beef Stew) and the superflushable resource on that PM (Beef Broth) are defined with theoretical consumption codes of T.

When the user enters a PR (production receipt) transaction for the final produced resource, Beef Stew, the system recognizes Beef Broth as a superflushable resource. After theoretically consuming as much of the resource as possible from locations where Broth is reserved for this schedule release, it finds the rest of the necessary quantity by "superflushing" it, by consuming it from the superflushable PM that produces it, which is on the same schedule. If the user enters a negative PR, the reservations are reset, but negative superflushing is not possible.

Suppose the user has received 100 cases of beef stew. To produce this quantity, the user must consume 500 gallons of beef broth. The system finds only 300 gallons of beef broth reserved for this schedule release. It theoretically consumes those 300 gallons. The other 200 gallons are consumed from the Broth Prep PM which was run on the same schedule, with the same release number (see requirement #1, above).

If the default location for consumption of beef broth (on the PM Beef Stew) and the default location for production of beef broth (on the PM Beef Broth) are not the same, the production location is used for both.

Since 200 gallons of Beef Broth were theoretically produced by the superflushing process, the user must have used some resources to make it. Therefore, the system also generates TC and CC transactions for any resources on the Broth Prep PM that have theoretical consumption codes of T or C.

In a preferred embodiment, superflushing stops at the second level. If the bouillon used to make the beef broth was produced by another superflushable PM, a preferred manufacturing process control system. constructed in accord with the invention would NOT superflush down to that third level.

To change a PM from superflushable to non-superflushable, the user must delete the single non-reportable produced resource. The user can then define new produced resources for the task, being careful to define all reportable produced resources before non-reportable ones.

To change a PM from non-superflushable to superflushable, delete all produced resources except one and make that one non-reportable.

Theoretical Consumption Codes

Each consumed resource on a task is assigned a theoretical consumption code, which indicates the method used to track consumption.

(1) If the code is D, it is a direct-issue resource. A DI (direct issue) transaction is entered to issue this resource to a schedule. The user would normally issue it from a location where it has already been reserved for that schedule.

(2) If the code is C, it is a calculated cost resource. Suppose the user makes wagons, and the user uses 2,000 screws to make a batch of 100. the user never takes the trouble to assign a particular 2,000 screws to a particular schedule: the user just knows the user uses 20 screws per wagon. When the user brings screws from the warehouse to the production floor, the user brings them in barrels of 5,000.

To reproduce this situation in a preferred manufacturing process control system constructed in accord with the invention, the user would enter an IP (issue to production) transaction each time a barrel of screws is brought from the warehouse. This reduces inventory by the appropriate quantity. Then, each time the user reports produced wagons (with a PR (production receipt) transaction), the system "consumes" the appropriate number of screws for the user. If the user enters a PR for 50 wagons, for example, the system generates a CC (calculated cost) transaction for 1,000 screws, because the user uses 20 screws for each wagon.

It is not a good idea to use the calculated cost method for resources with lot numbers. Suppose the user works with food products, and the user uses an IP transaction to issue two entire lots of tomatoes to the production line. When the user enters PR transactions for the tomato soup, tomato paste, vegetable soup, and so on, the system generates CC transactions for the appropriate quantities of tomatoes. However, it has no way of knowing which lot of tomatoes went into each product: they were not issued to particular schedules, just to the floor. Obviously, this would be an undesirable situation if the user ever needed to trace the sources of ingredients.

(3) If the code is T, it is a theoretical consumption resource. The user can use this code for a balance or non-balance resource. the user might use it for a non-balance resource like electricity, for example, if the user knows the user uses 1 KwH for every 100 wagons the user manufacture. If the user enters a PR for 50 wagons, the system generates a TC (theoretical consumption) transaction for .5 KwH of electricity, the user could also use this code for a very inexpensive balance resource.

There are three major differences between the calculated cost and theoretical consumption methods:

(1) Calculated cost is for balance resources only. This is because the user must enter an IP (issue to production) transaction, which implies that the user is issuing something from a location in a warehouse. A non-balance resource is not stored in a location, so it cannot be issued to production.

(2) Reservations are not created for calculated cost resources. A reservation ties a particular quantity of a resource, at a particular location, to a specific schedule. This is not the way calculated cost resources are handled: they are issued to the production floor, for use in any schedule, through an IP transaction.

On the other hand, reservations are created for theoretical consumption resources. When the user enters the PR transaction, the resource is "consumed" from the locations where it is reserved.

(3) Calculated cost requires two steps, while theoretical consumption requires only one. For a calculated cost resource, the user must enter an IP transaction and a production receipt transaction. For a theoretical consumption resource, the user need only enter the producton receipt transaction.

Theoretical Production

Theoretical production occurs when a task has a non-reportable produced resource. Each task on a production model can have at most one non-reportable produced resource, so that the system can use the quantities of the other produced resource(s) to calculate the quantity produced of the non-reportable resource.

Suppose the user has a task that involves taking chickens apart. Part of the task is to pluck the feathers, but the feathers are not valuable enough for the user to bother reporting the exact quantity produced. In general, the user knows that the user "produces" two ounces of chicken feathers for each chicken plucked.

For this task, the user might define the chicken feathers as a non-reportable produced resource. Such a resource is "theoretically produced." This means that when the user enters the ON or PR transactions for the other produced resources on the appropriate task (usually the same task that produces the chicken feathers), the system uses those transactions to calculate the quantity of chicken feathers produced. The system then generates a TP (theoretical production) transaction for that quantity.

Suppose one batch of this task consumes one chicken. For each chicken consumed, this task produces two ounces of feathers, two legs, two breasts, and two wings. The production distribution percentages defined for each produced resource are:

Feathers - must be zero because the resource is non-reportable

Legs - 30 percent
Breasts - 40 percent
Wings - 30 percent

The user has entered a PR for 6 legs. Using the PR quantity, the batch size, and the production distribution percentages, the system calculates a quantity for the feathers and generates a TP transaction for that quantity. This is done as follows:

Qty of Feathers = # batches for PR x prod dist % for resource on PR x batch size of feathers

The PR for 6 legs represents 3 batches (2 legs per batch of 1 chicken), the production distribution percentage for legs is 30, and one batch produces 2 ounces of feathers. So:

```
 _____
|                                                      |
|  Qty of Feathers = 3 x .30 x 2 - 1.8 ounces          |
|_____|
```

The PR for 6 chicken legs results in a system-generated TP transaction for 1.8 ounces of feathers. For each subsequent PR transaction (for legs, breasts, or wings), another TP transaction is generated for the appropriate quantity of feathers.

Transactions

A preferred system constructed and operated in accord with the invention defines 21 basic transactions:

| Transaction Type | Meaning |
| --- | --- |
| CA | Cost Adjustment |
| CC | Calculated Cost |
| CY | Cycle Count Adjustment |
| DI | Direct issue |
| IA | Inventory Adjustment |
| IM | Indirect Measurement |
| IP | Issue to Production |
| MI | Miscellaneous Issue |
| MR | Miscellaneous Receipt |
| ON | Ongoing Production |
| PC | Pick Complete |
| PR | Production Receipt |
| RA | Resource Adjustment |
| RC | Resource Number Change |
| RS | Return to Stock |
| RT | Return to Production |

(continued)

| Transaction Type | Meaning |
| --- | --- |
| SC | Scrap |
| TC | Theoretical Consumption |
| TP | Theoretical Production |
| TR | Transfer Resource |

These are generally transactions that cannot vary between users because of the way they relate to the structure of a preferred manufacturing process control system constructed in accord with the invention. For example, this category includes schedule-related transactions, the transactions the user uses to tell the computer what is happening on the production lines.

In a preferred system constructed in accord with the invention, transactions can be entered by operators using the Transaction Entry program. The best way to become familiar with these transactions, and to analyze how they fit into the daily operations at the plant, is to read the descriptions provided at the beginning of each transaction screen.

A preferred system constructed in accord with the invention has four pre-defined transactions that can only be generated by the computer, in response to certain actions on the operator's part. These transactions are described below.

Theoretical Consumption (TC) & Calculated Cost (CC) - These transactions can be generated when an operator enters a PR (production receipt) or ON (ongoing production) transaction. PR and ON transactions record the production of a resource from a production model on a particular schedule.

Each consumed resource on a production model is assigned a Theoretical Consumption Code. If that code is D, the user tells the system specifically when the user issues some of the resource to a schedule. If that code is T or C, the system calculates how much the user used based on the quantity of produced resources the user report. If 20 screws are used for every wagon produced (this information is on the production model), and the user reports production of 10 wagons, the system knows enough to generate a transaction for 200 screws.

Whether the user has the system do this for any individual resource depends on how closely the user wants to track consumption of it.

Theoretical Production (TP) - This transaction occurs when the production model has a non-reportable produced resource. The system calculates the quantity of the resource produced, based on reported production of other resources on the same task or a later task. For more information, see <u>Theoretical Production</u>.

Cycle Count (CY) - The cycle counting function in a preferred manufacturing process control system constructed in accord with the invention allows the user to count inventory on a rotating basis, without every having to shut down the whole plant just for that purpose. Briefly, that process works as follows:

(1) The system generates a list of resources and locations that need to be counted.

(2) The user tells the system, through Cycle Count Entry, what quantity of each resource was actually found at each location. There may be a difference between the expected quantity of a resource at a location, and the actual quantity reported for that location.

(3) If the user confirms that the reported quantity is the real quantity at that location, by running the Cycle Count Variance Report and using the option to update the files, then the system generates a cycle count transaction to account for the difference.

The whole purpose of the CY transaction is for the system to have a record indicating the reason why the quantity at that location was increased or decreased.

**User-Defined Transactions**

User-defined transactions are necessary because location classifications are user-defined (see <u>Location Classifications</u>, above) the user can define an unlimited number of transactions, using the User-Defined Transaction Maintenance program. These transactions allow the user to move resources from one location classification to another, and to change the location classification of a resource without moving it.

Defining the transactions provides the operator with the flexibility to do things in his or her own way. It enables the user to use the same accounting system the user always has, rather than changing all the daily operations to fit the software. The user determines what counts as an inventory amount and what counts as work-in-process, the user determines what paths a resource can follow -- if the user doesn't define a transaction moving resources from the vendor directly to stock, it can't be done.

A preferred transaction records all the ways that a resource could reach each location classification. the user probably needs more than just the paths from classification to classification. For example, a resource could get to inspection from another classification OR from a vendor.

Unit of Measure Conversion

A preferred manufacturing process control system constructed in accord with the invention provides for two types of unit of measure conversion, linear and non-linear. Both types of conversion records are entered through Unit of Measure Conversion Maintenance. When the user enters a record for converting in one direction (for example, from OZ to LB), the system automatically creates a record for the opposite conversion (from LB to OZ).

"Linear" conversion means that a quantity in the first unit of measure (abbreviated "UM") can always be converted to the second UM using the same ratio. For example, one pound is 16 ounces, two pounds are 32 ounces, and so on. For this type of conversion, the user only need to define one "conversion factor."

A "non-linear" conversion is used when there is no consistent relationship between the two units. For example, suppose the user orders oil in large quantities and store it in a large, irregularly-shaped vat 20 feet high (see figure 1). the user determines how much oil the user has by measuring the height of the oil in the vat.

To handle this type of situation as accurately as possible, the user provides the system with a number of from- and to-quantity pairs that the user knows are correct, so that is can estimate the conversion for other quantities. For example, the user might enter three pairs for the vat of oil: 10 ft = 40 gl, 15 ft - 70 gl, and 20 ft = 110 gl. If the quantity in feet or gallons does not exactly match a figure in one of these pairs, the system uses the two nearest sets to approximate the conversion. If the user records 18 feet of oil, for example, 18 is 3/5 of the way between 15 and 20, so the number of gallons is 3/5 of the way from 70 to 85, or 79 gallons.

The number of conversion pairs the user needs to enter depends on (a) how accurate the user wants the conversion to be and (b) the shape of the vessel. In this case, the user could enter just five conversion pairs, because between the pairs entered for 5 feet/10 feet, 10 feet/15 feet, 15 feet/20 feet, and 20 feet/25 feet (see illustration), the shape of the vessel is fairly regular. Adding an extra conversion pair between 5 feet and 10 feet, for example, would not add to the accuracy of the System's conversion.

The user can enter conversion information for a specific resource or for all resources. For example, there are 16 ounces in a pound regardless of which resource the user is measuring. However, the user may have 24 cans in a case of soup, but 20 cans in a case of beans. In addition, the user can have a conversion for a specific resource/warehouse/location combination (non-linear conversions MUST be resource/warehouse/location specific).

When converting a quantity, the system first looks for a conversion record for the specific resource/warehouse/location combination (if warehouse and location are available). If none is found, it checks for a resource-specific conversion. Lastly, it checks for a general conversion.

The illustrated computer aided material requirements planning system described above meets the desired objects by providing an improved system permitting the monitoring and control of process and repetitive manufactures, as well as discrete manufactures. The system is capable of accurately modeling and simulating the aforementioned manufacturing processes and providing accurate scheduling, cost accounting, and reporting facilities. Those skilled in the art will fully realize that text provided above describes preferred embodiments of the invention, and that systems embodying the principles set forth herein -- although not incorporating elements fabricated and configured in the exact manner described in the detailed description, fall within the scope of the claimed invention.

For example, it will be appreciated that input signals, and particularly reporting signals reflecting amounts of consumed and/or produced resources, can be input to the system from production monitoring machinery, as well as from the user terminal. Further, it will be appreciated that output signals generated by the above-described system can be used to control the operation of production machinery, as well as driving a printer for presenting reports of production activity.

**Claims**

1. A digital data processing apparatus (5) for manufacturing process control, comprising:

> A. first input means (20) for inputting digital signals representative of one or more resource elements consumed in a manufacturing process,
> B. second input means (22) for inputting digital signals representative of one or more resource elements produced by said manufacturing process,

C. output means (36) coupled with the first and second input means, for generating output signals representative of at least selected portions of said manufacturing process, including manufacturing relations associated therewith, said manufacturing relations including at least one of an operational relation, a planning relation, and a financial relation,

D. third input means (24) for inputting digital signals representing one or more tasks performed during said manufacturing process, each including signals representing (i) one or more resource elements consumed by the task, (ii) one or more resource elements produced by the task, (iii) one or more production operations performed during the course of the task, and (iv) manufacturing relations between the task and one or more other tasks, and

E. production modelling means (28), coupled with said first, second and third input means, for generating and storing a production model representing said manufacturing process and including task-representative signals representing the tasks performed during that process, each task-representative signal including signals representing (i) one or more resource elements consumed by the associated task, (ii) one or more resource elements produced by the associated task, (iii) one or more production operations performed during the course of the associated task, and (iv) manufacturing relations between the associated task and one or more other tasks, whereby said task-representative signals represent manufacturing relations between resources consumed and produced by each task and by the manufacturing process on any of the following bases

    i) one-to-one,
    ii) one-to-many,
    iii) many to one,
    iv) many-to-many.

**2.** A digital data processing apparatus according to claim 1,

    (a) wherein said output means (3b) comprises means for generating digital signals representative of at least one of production, yield, consumption, composition, value, and variances therein of selected ones of said resource elements; or
    (b) wherein

        A. said third input means (24) includes task-defining means (26) for inputting digital signals representative of one or more tasks performed during said manufacturing process, and
        B. said production modeling means (28) includes task-storing means (32) responsive to said task-representative signal for generating and storing digital signals representative one or more of

            i) one or more resource elements consumed by a task,
            ii) one or more resource elements produced by a task,
            iii) one or more production operations performed during the course of a task, and
            iv) manufacturing relations between the associated task and one or more other tasks; or

        C. wherein said production modeling means (28) comprises means for generating a digital signal indicating that a resource element produced by one task serves as a resource element consumed by the same or another task.

**3.** A digital data processing apparatus according to claim 1, wherein said output means (36) includes cost computation means (38) for generating a digital signal representative of a cost associated with at least one of a consumed resource, a produced resource, and a task.

**4.** A digital data processing apparatus according to claim 3,

    (a) wherein said cost computation means (38) includes cost roll-up means (42) for generating a digital signal representative of a cost roll-up adding the cost of all consumed resources used in producing a resource, associated with one or more of said tasks; or
    (b) wherein

        A. said first input means (20) comprises means for inputting digital signals representative of costs associated with one or more resource elements consumed in said manufacturing process, and
        B. said cost computation means (38) comprises means (44) for generating a digital signal representative of a cost distribution associated with each of plural resources associated with one said task: or

C. wherein said cost computation means (38) comprises means (46) for generating a digital signal representative of a net realizable value of-one or more resource elements produced by a selected task.

**5.** A digital data processing apparatus according to claim 1,

(a) comprising means (38) coupled with said production modeling means (28) for generating a digital signal defining a first said production model as a master production model and for defining other said production models as being dependent on said master production model, said dependent production model having in common with said master production model tasks and produced resource elements; or

(b) wherein said production modeling means (28) includes means for generating a digital signal representative of a production model type and for associating that production model type-representative signal with one or more production models having similar operational, financial, or planning characteristics.

**6.** A digital data processing apparatus according to claim 1, wherein

A. said second input means (22) includes means for inputting digital signals representative of amounts of one or more resource elements produced by said manufacturing process, and

B. said output means includes theoretical consumption means (54) for generating a digital signal representative of an amount of one or more resource elements consumed by said process manufacture in the production of said one or more produced resource elements, and

wherein for example said theoretical consumption means (54) includes means (58) (or generating a digital signal representative of a production distribution associated with each of plural resources produced by one or more said tasks.

**7.** A digital data processing apparatus according to claim 1, wherein

A. said second input means (22) includes means for inputting digital signals representative of amounts of one or more resource elements produced by a task associated with said manufacturing process, and

B. said output means includes theoretical production means (50) selectively operable for generating a digital signal representative of an amount of one or more resource elements produced by the same task.

**8.** A digital data processing apparatus according to claim 7,

(a) wherein said theoretical production means (50) includes means (58) for generating a digital signal representative of a production distribution associated with each of plural resources produced by one or more said tasks; or

(b) wherein

A. said third input means (24) comprises means for inputting a digital signal indicating whether quantities of resources produced by a task are reportable, and

B. said digital data processing apparatus further comprises reportable task means (60) connected with said third input means (24) for selectively enabling said theoretical production means and for, alternatively, accepting input digital signals representative of a quantity of one or more resources produced by the task.

**9.** A digital data processing apparatus according to claim 1,

(a) wherein

A. said third input means (24) comprises

i) means for inputting a digital signal representative of temporal or volumetric output of a production run corresponding to a production model,

ii) means for inputting a digital signal representative of a temporal or volumetric output of a task batch corresponding to a task associated with said production model.

iii) means for inputting a digital signal representative of a mathematical relationship between said production run output and said task hatch output, and

B. said output means includes task batch means (40) for generating a digital signal representative of a number of said task batches required to complete said production run; or

(b) wherein

A. said third input means (24) includes means for inputting digital signals representative of a type of quantitative relation between a resource element consumed by a task and one or more resources produced by that same task.

B. said output means includes batch/linear consumption means (52) responsive to said quantitative relation type-representative signal for selectively generating a digital signal representative of either

i. a linear quantitative relation between said consumed resource and said one or more produced resources, or

ii. a step-function relation between said consumed resource and said one or more produced resources.

**10.** A digital data processing apparatus according to claim 6, wherein

A. said first input means (20) comprises inventory means for inputting and storing a digital signal representative of a quantity of a physical occurence of a consumed resource element available for use in said manufacturing process,

B. said theoretical consumption means (54) includes means (56) for modifying said stored quantity- representative signal to reflect a quantity of said resource element consumed during said manufacturing process,

C. said output means comprises calculated cost means (48) for generating a digital signal representative of an amount of said resource element consumed by said manufacturing process in the production of said resource elements without modifying said stored quantity-representative signal.

**11.** A digital data processing apparatus according to claim 1, wherein

A. said third input means (24) comprises

i) means for inputting a digital signal representative of a quantity of a resource element consumed in a task,

ii) means for inputting a digital signal representative of a temporal duration of an operation associated with that same task, and

B. said output means comprises resource operation dependency means (34) for generating a digital signal establishing a relation between a quantity of the said consumed resource element and the temporal duration of said operation for selected ones of said consumed resources and said operations.

**12.** A digital data processing apparatus according to claim 1, further comprising resource means connected with said first and second input means (39) for generating and storing a digital signal representative of a production characteristic associated with at least one said resource element, said production characteristic including one or more of a financial, operational, planning, and tracking attribute of said at least one resource element.

**13.** A digital data processing apparatus according to claim 12,

(a) wherein said resource means comprises class/sub-class means (74) for generating a digital signal defining one or more said resources to have similar production characteristics; or

(b) wherein said resource means (39) comprises location classification means (76) for generating a digital signal representing a location classification associated with a physical occurrence of a resource element, said location classification including one or more said production characteristics.

**14.** A digital data processing apparatus according to claim 13,

(a) further comprising transaction means (66) connected to said resource means for modifying a digital signal representative of one or more production characteristics associated with a physical occurrence of a resource element, and for example

wherein said transaction means (66) comprises resource change means (82) for modifying a digital signal which represents a physical occurrence of one resource element to represent a physical occurrence of another resource element and for modifying, concurrently, one or more production characteristic-representative signals associated with the modified physical occurrence-representative signal; or

(b) wherein said location classification means (76) comprises user-defined classification means (92) for inputting digital signals representative of user-defined location classifications, and for example

wherein said location classification means (76) comprises user-defined classification change means (92) for modifying a digital signal representation of a location classification associated with a physical occurrence resource element.

15. A digital data processing apparatus according to claim 12,

(a) comprising

A. tracking characteristic means (68) coupled with said resource means (39) for generating a balance/non-balance signal representative of a tracking characteristic of a resource element, and
B. balance/non-balance means (70), coupled with said tracking characteristic means and with said output means, and responsive to said balance/non-balance signal for selectively tracking physical occurrences of a resource element; or

(b) wherein said resource means (39) comprises

A. means (88) for inputting a digital signal representative of a standard unit of measure associated with a resource element,
B. means (90) for inputting a digital signal representative of a transaction unit of measure associated with a physical occurrence of that same resource element,
C. means (86) for inputting a digital signal representative of conversion factor for converting a quantity of a physical occurrence of the resource element between the standard unit of measure associated with the resource element and the transaction unit of measure associated with the physical occurrence of the resource element, and
D. means (72) for inputting a digital signal representative of quantity expressable in the transaction unit of measure associated with a physical occurrence of the resource element and for convening that quantity into a digital signal representative of an equivalent quantity expressable in the standard unit of measure associated with the resource clement and for generating a signal representative thereof; or

(c) wherein said resource means (39) comprises

A. means (88) for inputting digital signals representative of a standard unit of measure associated with a resource element,
B. means (90) for inputting a digital signal representative of a transaction unit of measure associated with a storage location for storing a physical occurrence of a resource element,
C. means (86) for inputting a digital signal representative of conversion factor for converting a quantity between the transaction unit of measure associated with the storage location and the standard unit of measure associated with a resource element stored in that storage location,
D. means (72) connected with said factor means for inputting a digital signal representative of quantity expressable in the transaction unit of measure and associated with the storage of a physical occurrence of a resource element and for converting that quantity into a digital signal representative of an equivalent quantity expressable in the standard unit of measure and for generating a signal representative thereof; or

(d) wherein said resource means (39) comprises

A. means (96) for inputting a digital signal representative of a theoretical quantity at a predetermined potency level, of a consumed resource element required for production of a produced resource element,
B. means (94) for inputting a digital signal representative of a potency-percentage quantity of a physical occurrence of said consumed resource element,
C. means (78) for generating a digital signal representative of a physical quantity of said physical occurrence of said consumed resource element required for production, said physical quantity-required signal being expressed in terms of said potency-percentage and being based upon the predetermined potency level; or

e) wherein said resource means (39) comprises

A. means (98) for inputting digital signals representative of grade requirements for a resource element consumed in the manufacturing process and for generating a grade-requirement signal representative thereof,
B. means (100) for inputting a digital signals representative of a grade-based characteristic of a physical occurrence of the resource element and for generating a grade-reporting signal representative thereof.
C. means (80) responsive to said grade-requirement signal and to said grade-reporting signal for generating a digital signal indicating whether the physical occurrence of the resource element is a candidate for use in the manufacturing process.

**16.** A method of operating a digital data processing apparatus (5) for manufacturing process control, comprising the steps of:

A. inputting digital signals representative of one or more resource elements consumed in a manufacturing process,
B. inputting digital signals representative of one or more resource elements produced by said manufacturing process,
C. generating output signals representative of at least selected portions of said manufacturing process, including manufacturing relations associated therewith, said manufacturing relations including at least one of an operational relation, a planning relation, and a financial relation,
D. inputting digital signals representing one or more tasks performed during said manufacturing process, more tasks performed during said manufacturing process, each including signals representing (i) one or more resource elements consumed by the task, (ii) one or more resource elements produced by the task, (iii) one or more production operations performed during the course of the task, and (iv) manufacturing relations between the task and one or more other tasks, and
E. generating and storing a production model representing said manufacturing process and including task-representative signals representing the tasks performed during that process, each task-representative signal including signals representing (i) one or more resource elements consumed by the associated task, (ii) one or more resource elements produced by the associated task, (iii) one or more production operations performed during the course of the associated task, and (iv) manufacturing relations between the associated task and one or more other tasks, whereby said task-representative signals represent manufacturing relations between resources consumed and produced by each task and by the manufacturing process on any of the following bases

(i) one-to-one,
(ii) one-to-many,
(iii) many-to-one,
(iv) many-to-many.

**17.** A method for operating a digital data processing apparatus according to claim 16,

(a) comprising the further step of generating a digital signal representative of at least one of production, yield, consumption, composition, value, and variances therein of selected ones of said resource elements; or
(b) comprising the further steps of

A. inputting a digital signal representative of one or more tasks performed during said manufacturing process, and
B. responding to said task-representative signal for generating and storing a digital signal representative of at least one of

i) one or more resource elements consumed by the associated task,
ii) one or more resource elements produced by the associated task,
iii) one or more production operations performed during the course of the associated task, and
iv) manufacturing relations between the associated task and one or more other tasks; or

(c) comprising the further step of generating a digital signal defining a resource element produced by one task to be a resource element consumed by the same or another task.

18. A method for operating a digital data apparatus according to claim 16, comprising the further step of generating a digital signal representative of a cost associated with at least one of a consumed resource, a produced resource, and a task, and for example
    comprising the further step of generating a digital signal representative of a cost roll-up associated with one or more tasks of said manufacturing process.

19. A method for operating a digital data apparatus according to claim 18, comprising the further step of inputting a digital signal representative of a cost associated with one or more resource elements consumed in said manufacturing process.

20. A method for operating a digital data apparatus according to claim 19, comprising the further step of generating a digital signal representative of a cost distribution associated with each of plural resources associated with one said task, and for example
    comprising the further step of generating a digital signal representative of a net realizable value of one or more resource elements produced by a task.

21. A method for operating a digital data apparatus according to claim 16,

    (a) comprising the further step of generating a digital signal defining at least one said production model as being a master production model and for defining other said production models as being dependent on said master production model, each said dependent production model having one or more consumed resource elements in common with a corresponding consumed resource element associated with said master production model; or
    (b) comprising the further step of generating a digital signal representative of a production model type and for associating that production model type signal with one or more production models having similar operational, financial, or planning characteristics; or
    (c) comprising, the further steps of

        A. inputting a digital signal representative of an amount of one or more resource elements produced by said manufacturing process, and
        B. generating a digital signal representative of an amount of one or more resource elements consumed by said manufacturing process in the production of said resource elements, and for example
            comprising the further step of generating a digital signal representative of a production distribution associated with each of plural resources produced by one or more said tasks; or

    (d) comprising the further steps of

        A. inputting a digital signal representative of an amount of a first resource element produced by said manufacturing process, and
        B. generating a digital signal representative of an amount of one or more other resource elements produced by said manufacturing process in conjunction with the production of said first resource element, and for example
            comprising the further step of generating a digital signal representative of a production distribution associated with each of plural resources produced by one or more said tasks; or

    (e) comprising the further steps of

        A. inputting a digital signal representative of temporal or volumetric output of a production run corresponding with the production model,
        B. inputting a digital signal representative of a temporal or volumetric output of a task batch represented by a task associated with said production model.
        C. inputting a digital signal representative of a mathematical relationship between the production run output and the task batch output, and
        D. generating a digital signal representative of a number of said task batches required to complete said production run; or

(f) comprising the further steps of

A. inputting a digital signal representative of a type of quantitative relation between a resource element consumed by a task and one or more resources produced by that same task,
B. responding to said quantitative relation type-representative signal for selectively generating a digital signal representative of one of

i. a linear quantitative relation between said consumed resource and said one or more produced resources, and
ii. a step-function relation between said consumed resource and said one or more produced resources; or

(g) comprising the further steps of

A. inputting a reportable-task signal indicating whether quantities of a resource produced by a task are reportable, and
B. responding to said reportable task signal for selectively accepting input digital signals representative of quantities of resources produced by the task: or

(h) comprising the further steps of

A. inputting and storing a digital signal representative of a quantity of a physical occurrence of a consumed resource element available for use in said manufacturing process,
B. modifying said stored quantity-representative signal to reflect a quantity of said resource element consumed by said manufacturing process, and
C. generating a digital signal representative of amounts of said resource element consumed by said manufacturing process in the production of said resource elements without modifying said stored quantity-representative signal; or

(i) comprising the further steps of

A. inputting a digital signal representative of a quantity of a consumed resource used in a task associated with said production model,
B. inputting a digital signal representative of a temporal duration of an operation associated with that task, and
C. generating a digital signal establishing a relation between a quantity of a resource consumed in the task and the temporal duration of an operation associated with the task.

22. A method for operating a digital data apparatus according to claim 16, comprising the further step of generating and storing a digital signal representative of a production characteristic associated with at least one said resource, said production characteristic including one or more of a financial, operational, planning, and tracking attribute associated with the resource.

23. A method for operating a digital data apparatus according to claim 22, comprising the further step of generating a digital signal defining one or more said resources to have similar production characteristics.

24. A method for operating a digital data apparatus according to claim 22, comprising the further step of generating a digital signal representing a location classification associated with a physical occurrence of a resource element, said location classification including one or more production characteristics.

25. A method for operating a digital data apparatus according to claim 24,

(a) comprising the further step of modifying a digital signal representative of one or more production characteristics associated with a physical occurrence of a resource element, and for example
comprising the further step of modifying a digital signal which represents a physical occurrence of one resource element so as to represent a physical occurrence of another resource element and for, concurrently, modifying a production characteristic-representative signal associated with the physical occurrence-representative signal; or

(b) comprising the further step of inputting a digital signal representative of a user-defined location classification, and for example

comprising the further step of modifying a user-defined location classification associated with a physical occurrence of said resource element.

**26.** A method for operating a digital data apparatus according to claim 23, comprising the further steps of

A. generating a balance/non-balance signal representative of a tracking characteristic of a resource element, and

B. responding to said balance/non-balance signal for selectively tracking physical occurrences of a resource element.

**27.** A method for operating a digital data apparatus according to claim 22,

(a) comprising the further steps of

A. inputting a digital signal representative of a standard unit of measure associated with a resource element,

B. inputting a digital signal representative of a transaction unit of measure associated with a physical occurrence of said resource element,

C. inputting a digital signal representative of conversion factor for converting a quantity representative of a physical occurrence of the resource element between the standard unit of measure associated with the resource element and the transaction unit of measure associated with the physical occurrence of the resource element,

D. inputting a digital signal representative of quantity expressable in the transaction unit of measure and associated with a physical occurrence of a resource element, and

E. converting that quantity-representative signal into a digital signal representative of an equivalent quantity expressable in the standard unit of measure and for generating a signal representative thereof; or

(b) comprising the further steps of

A. inputting a digital signal representative of a standard unit of measure associated with a resource element,

B. inputting a digital signal representative of a transaction unit of measure associated with a storage location for storing a physical occurrence of a resource element,

C. inputting a digital signal representative of conversion factor for converting a quantity between the transaction unit of measure associated with the storage location and the standard unit of measure associated with a resource element stored in that storage location,

D. inputting a digital signal representative of quantity expressable in the transaction unit of measure and associated with the storage of a physical occurrence of a resource element, and

E. converting that quantity into an equivalent quantity expressable in the standard unit of measure and for generating a signal representative thereof; or

(c) comprising the further steps of

A. inputting a digital signal representative of a theoretical quantity, at a predetermined level, of a consumed resource element required for production of a produced resource element,

B. inputting a digital signal representative of a potency-percentage quantity of a physical occurrence of said consumed resource element,

C. generating a digital signal representative of a physical quantity of said physical occurrence of said consumed resource element required for production, said physical quantity required signal being expressed in terms of said potency-percentage and being based upon the predetermined potency level; or

(d) comprising the further steps of

A. inputting a digital signal representative of a grade requirement for a resource element consumed in the manufacturing process and for generating a grade-requirement signal representative thereof,

B. inputting a digital signal representative of a grade-based characteristic of a physical occurrence of the resource element and for generating a grade-reporting signal representative thereof,

C. responding to said grade-requirement signal and to said grade-reporting signal for generating a digital signal indicating whether the physical occurrence of the resource element is a candidate for use in the manufacturing process.

**Patentansprüche**

1. Digitale Datenverarbeitungsvorrichtung zur Steuerung eines Herstellungsverfahrens, aufweisend:

   A. erste Eingabemittel (20) zur Eingabe digitaler Signale, die ein oder mehrere Betriebsmittel repräsentieren, die in einem Herstellungsverfahren verbraucht werden,

   B. zweite Eingabemittel (22) zur Eingabe digitaler Signale, die ein oder mehrere Betriebsmittel repräsentieren, die durch das Herstellugsverfahren erzeugt werden,

   C. Ausgabemittel (36), die mit den ersten und zweiten Eingabemitteln gekoppelt sind, zur Erzeugung von Ausgabesignalen, die zumindest ausgewählte Bereiche des Herstellungsverfahrens repräsentieren, umfassend die damit verbundenen Herstellungsbeziehungen, wobei die Herstellungsbeziehungen zumindest eine operative Beziehung, eine organisatorische Beziehung oder eine finanzielle Beziehung umfassen,

   D. dritte Eingabemittel (24) zur Eingabe digitaler Signale, die eine oder mehrere während des Herstellungsverfahrens durchgeführte Arbeiten repräsentieren, wobei jedes Signale umfaßt, die (i) ein oder mehrere durch die Arbeit verbrauchte Betriebsmittel, (ii) ein oder mehrere durch die Arbeit erzeugte Betriebsmittel, (iii) eine oder mehrere während des Arbeitsverlaufes durchgeführte Produktionsoperationen und (iv) Herstellungsbeziehungen zwischen der Arbeit und einer oder mehreren anderen Arbeiten repräsentieren, und

   E. Mittel zur Produktionsmodellierung, die mit den ersten, zweiten und dritten Eingabemitteln gekoppelt sind, zur Erzeugung und Speicherung eines Produktionsmodells, das das Herstellungsverfahren repräsentiert und die arbeitrepräsentierenden Signale umfaßt, die die während des Verfahrens durchgeführten Arbeiten repräsentieren, wobei jedes arbeitrepräsentierende Signal Signale umfaßt, die (i) ein oder mehrere durch die damit verbundene Arbeit verbrauchte(s) Betriebsmittel, (ii) ein oder mehrere durch die damit verbundene Arbeit erzeugte(s) Betriebsmittel, (iii) eine oder mehrere während des damit verbundenen Arbeitsverlaufs durchgeführte Produktionsoperation(en) und (iv) Herstellungsbeziehungen zwischen der damit verbundenen Arbeit und einer oder mehreren anderen Arbeiten repräsentieren, wobei die arbeitrepräsentierenden Signale Herstellungsbeziehungen zwischen durch jede Arbeit und durch das Herstellungsverfahren auf jeder der folgenden Grundlagen

   i) eins zu eins,
   ii) eins zu mehreren,
   iii) mehrere zu eins,
   iv) mehrere zu mehreren,

   verbrauchten und erzeugten Betriebsmitteln repräsentieren.

2. Digitale Datenverarbeitungsvorrichtung nach Anspruch 1,

   (a) bei der die Ausgabemittel (36) Mittel zur Erzeugung digitaler Signale umfassen, wobei die Signale repräsentativ für zumindest die Produktion, die Ergiebigkeit, den Verbrauch, den Wert oder Variationen dabei an ausgewählten Betriebsmitteln sind;
   oder

   (b) bei der

   A. die dritten Eingabemittel (24) arbeitdefinierende Mittel (26) zur Eingabe digitaler Signale umfassen, die eine oder mehrere Arbeiten repräsentieren, die während des Herstellungsverfahrens durchgeführt werden, und

   B. die Mittel zur Produktionsmodellierung (28) arbeitspeichernde Mittel (32) umfassen, die auf die arbeit-

37

repräsentierenden Signale zur Erzeugung und Speicherung digitaler Signale reagieren, die einen oder mehrere der folgenden Punkte repräsentieren:

> i) ein oder mehrere durch die Arbeit verbrauchte Betriebsmittel,
> ii) ein oder mehrere durch die Arbeit erzeugte Betriebsmittel,
> iii) eine oder mehrere während des Arbeitsverlaufs durchgeführte Produktionsoperation(en), und
> iv) Herstellungsbeziehungen zwischen der verbundenen Arbeit und einer oder mehreren anderen Arbeiten; oder

> C. die Mittel zur Produktionsmodellierung (28) Mittel zur Erzeugung eines digitalen Signales aufweisen, das anzeigt, daß ein durch eine Arbeit erzeugtes Betriebsmittel als ein Betriebsmittel dient, daß durch die gleiche oder eine andere Arbeit verbraucht wird.

**3.** Digitale Datenverarbeitungsvorrichtung nach Anspruch 1, bei der die Ausgabemittel (36) Kostenberechnungsmittel (38) zur Erzeugung eines digitalen Signales umfassen, das die mit mindestens einem verbrauchten Betriebsmittel, einem erzeugten Betriebsmittel und einer Arbeit verbundenen Kosten repräsentiert.

**4.** Digitale Datenverarbeitungsvorrichtung nach Anspruch 3,

> (a) bei der die Kostenberechnungsmittel (38) Kostenaufrechnungsmittel (42) zur Erzeugung eines digitalen Signals umfassen, das die mit einer oder mehreren Arbeit(en) verbundene Kostenaufrechnung repräsentiert, die die Kosten aller zur Herstellung eines Betriebsmittels verbrauchten Betriebsmittel addiert; oder

> (b) bei der

> A. die ersten Eingabemittel (20) Mittel zur Eingabe digitaler Signale aufweisen, die die mit einem oder mehreren in dem Herstellungsverfahren verbrauchten Betriebsmittel(n) verbundenen Kosten repräsentieren; und

> B. die Kostenberechnungsmittel (38) Mittel zur Eingabe digitaler Signale aufweisen, die eine Kostenverteilung verbunden mit jeder der Vielzahl von Betriebsmitteln verbunden mit einer der Arbeiten repräsentieren; oder

> C. bei der die Kostenberechnungsmittel (38) Mittel (46) zur Erzeugung eines digitalen Signales aufweisen, das einen brauchbaren Nettowert eines oder mehrerer durch eine ausgewählte Arbeit hergestellter Betriebsmittel repräsentiert.

**5.** Digitale Datenverarbeitungsvorrichtung nach Anspruch 1,

> (a) aufweisend Mittel (38) gekoppelt mit den Mitteln zur Produktionsmodellierung (28) zur Erzeugung eines digitalen Signale, das ein erstes Produktionmodell als ein Hauptproduktionsmodell und andere Produktionsmodelle definiert, wobei die anderen Produktionsmodelle von dem Hauptproduktionsmodell abhängig sind, wobei das abhängige Produktionsmodell gemeinsam mit dem Hauptproduktionsmodell Arbeiten und erzeugte Betriebsmittel hat; oder

> (b) bei der die Mittel zur Produktionsmodellierung (28) Mittel zur Erzeugung eines digitalen Signales umfassen, das den Typ des Produktionsmodells repräsentiert, und zur Verbindung des den Typ des Produktionsmodells repräsentierenden Signale mit einem oder mehreren Produktionsmodellen, die ähnliche operative, finanzielle oder organisatorische Charakteristika haben.

**6.** Digitale Datenverarbeitungsvorrichtung nach Anspruch 1, bei der

> A. die zweiten Eingabemittel (22) Mittel zur Eingabe digitaler Signale umfassen, die die Menge eines oder mehrerer durch das Herstellungsverfahren erzeugter Betriebsmittel repräsentieren, und

> B. die Ausgabemittel theoretische Verbrauchsmittel (54) zur Erzeugung eines digitalen Signales umfassen, das eine Menge eines oder mehrerer durch das Herstellungsverfahren verbrauchter Betriebsmittel bei der Produktion des einen oder der mehreren erzeugten Betriebsmittel repräsentieren, und

bei der beispielsweise die theoretischen Verbrauchsmittel (54) Mittel (58) zur Erzeugung eines digitalen Signalles umfassen, das eine Produktionsverteilung verbunden mit jedem der Vielzahl der durch eine oder mehrere Arbeit(en) erzeugten Betriebsmittel repräsentiert.

**7.** Digitale Datenverarbeitungsvorrichtung nach Anspruch 1, bei der

A. die zweiten Eingabemittel (22) Mittel zur Eingabe digitaler Signale umfassen, die die Mengen eines oder mehrerer Betriebsmittel repräsentieren, die durch eine Arbeit verbunden mit dem Herstellungsverfahren erzeugt wurden, und

B. die Ausgabemittel theoretische Produktionsmittel (50) selektiv einsatzfähig zur Erzeugung eines digitalen Signales umfassen, das die Menge eines oder mehrerer durch die gleiche Arbeit erzeugter Betriebsmittel(s) repräsentiert.

**8.** Digitale Datenverarbeitungsvorrichtung nach Anspruch 7,

(a) bei der die theoretischen Produktionsmittel (50) Mittel (58) zur Erzeugung eines digitalen Signals umfassen, das eine Produktionsverteilung verbunden mit jedem der Vielzahl der Betriebsmittel, die durch eine oder mehrere Arbeiten erzeugt wurden, repräsentiert; oder

(b) bei der

A. die dritten Eingabemittel (24) Mittel zur Eingabe eines digitalen Signales aufweisen, das anzeigt, ob Mengen von durch eine Arbeit erzeugten Betriebsmitteln anzeigbar sind, und
B. die digitale Darenverarbeitungsvorrichtung ferner anzeigbare Arbeitsmittel aufweist, die mit den dritten Eingabemitteln (24) verbunden sind zum selektiven Freigeben der theoretischen Produktionsmittel und alternativ zum Annehmen digitaler Eingabesignale, die eine Menge von einem oder mehreren durch die Arbeit erzeugten Betriebsmittel(n) repräsentieren.

**9.** Digitale Datenverarbeitungsvorrichtung nach Anspruch 1,

(a) bei der

A. die dritten Eingabemittel (24) aufweisen

i) Mittel zur Eingabe eines digitalen Signales, das eine temporäre oder volumetrische Ausgabe eines Produktionsdurchlaufes entsprechend eines Produktionsmodells repräsentiert,
ii) Mittel zur Eingabe eines digitalen Signales, das eine temporäre oder volumetrische Ausgabe einer Arbeitsmenge entsprechend einer Arbeit in Verbindung mit dem Produktionsmodell repräsentiert,
iii) Mittel zur Eingabe eines digitalen Signales, das eine mathematische Beziehung zwischen der Ausgabe des Produktionsdurchlaufes und der Ausgabe der Arbeitsmenge repräsentiert, und

B. die Ausgabemittel Arbeitsmengenmittel (40) zur Erzeugung eines digitalen Signales umfassen, das eine Anzahl dieser Arbeitsmengen repräsentiert, die zur Vervollständigung des Produktionsdurchlaufes notwendig sind; oder

(b) bei der

A. die dritten Eingabemittel (24) Mittel zur Eingabe digitaler Signale umfassen, die einen Typ einer quantitativen Beziehung zwischen einem durch eine Arbeit verbrauchten Betriebsmittel und einem oder mehreren durch die gleiche Arbeit erzeugten Betriebsmittel(n) repräsentieren,
B. die Ausgabemittel batch/lineare Verbrauchsmittel (52) umfassen, die auf das den Typ der quantitativen Beziehung repräsentierende Signal zur selektiven Erzeugung eines digitalen Signales reagiert, das entweder

i. eine lineare quantitative Beziehung zwischen dem verbrauchten Betriebsmittel und dem einen oder mehreren erzeugten Betriebsmittel(n), oder

ii. eine stufenartige Funktionsbeziehung zwischen dem verbrauchten Betriebsmittel und dem einen oder mehreren erzeugten Betriebsmittel(n)

repräsentiert.

10. Digitale Datenverarbeitungsvorrichtung nach Anspruch 6, bei der

A. die ersten Eingabemittel (29) Inventarmittel zur Eingabe und Speicherung eines digitalen Signales aufweisen, das die Menge einer physischen Häufigkeit eines verbrauchten Betriebsmittels repräsentiert, das in dem Herstellungsverfahren zur Benutzung zur Verfügung steht,

B. die theoretischen Verbrauchsmittel (54) Mittel (56) zum Modifizieren des gespeicherten mengenrepräsentierenden Signales umfaßt, um eine Menge des während des Herstellungsverfahrens verbrauchten Betriebsmittels wiederzugeben,

C. die Ausgabemittel kalkulierte Kostenmittel (48) zur Erzeugung eines digitalen Signales aufweisen, das eine Menge der Betriebsmittel repräsentiert, die durch das Herstellungsverfahren bei der Produktion der Betriebsmittel ohne Modifizierung des gespeicherten mengenrepräsentierenden Signales verbraucht wurden.

11. Digitale Datenverarbeitungsvorrichtung nach Anspruch 1, bei der

A. die dritten Eingabemittel (24) aufweisen

i) Mittel zur Eingabe eines digitalen Signales, das eine Menge eines durch die Arbeit vebrauchten Betriebsmittels repräsentiert,
ii) Mittel zur Eingabe eines digitalen Signales, das eine Zeitdauer einer Operation verbunden mit der gleichen Arbeit repräsentiert, und

B. die Ausgabemittel betriebamitteloperationsabhängige Mittel (34) zur Erzeugung eines digitalen Signales aufweisen, um eine Beziehung zwischen einer Menge des verbrauchten Betriebsmittels und der Zeitdauer der Operation für ausgewählte verbrauchte Betriebsmittel und Operationen aufzustellen.

12. Digitale Datenverarbeitangsvorrichtung nach Anspruch 1, ferner aufweisend Ressourcenmittel, die mit den ersten und zweiten Eingabemitteln (39) zur Erzeugung und Speicherung eines digitalen Signales verbunden sind, wobei das Signal eine mit zumindest einem der Betriebsmittel verbundene Produktionscharakteristik repräsentiert, wobei die Produktionscharakteristik ein oder mehrere finanzielle, operative, organisatorische und die Einteilung betreffende Attribut(e) des zumindest einen Betriebsmittels umfaßt.

13. Digitale Datenverarbeitungsvorrichtung nach Anspruch 12,

(a) bei der die Ressourcenmittel Klassifizierungs-/ Unterklassifizierungsmittel (74) zur Erzeugung eines digitalen Signales aufweisen, das eine oder mehrere Betriebsmittel mit ähnlichen Produktionscharakteristika definiert; oder

(b) bei der die Ressourcenmittel (39) Standortklassifizierungsmittel (76) zur Erzeugung eines digitalen Signales aufweisen, das eine Standortklassifikation verbunden mit einer physischen Häufigkeit eines Betriebsmittels repräsentiert, wobei die Standortklassifikation eine oder mehrere Produktionscharakteristika umfaßt.

14. Digitale Datenverarbeitungsvorrichtung nach Anspruch 13,

(a) ferner aufweisend Durchführungsmittel (66), die mit den Ressourcenmitteln verbunden sind, um ein digitales Signal zu modifizieren, das eine oder mehrere Produktionscharakteristika verbunden mit einer physischen Haufigkeit eines Betriebsmittels repräsentiert, und bei der beispielsweise
die Durchführungsmittel (66) Betriebsmitteländerungsmittel (82) zur Modifizierung eines digitalen Signales aufweisen, das eine physische Häufigkeit eines Betriebamittels repräsentiert, um eine physische Häufigkeit eines anderen Betriebsmittels zu repräsentieren und uni ein oder mehrere die Produktionscharakteristik repräsentierende Signal(e) verbunden mit dem modifizierten, die physische Häufigkeit repräsentierenden Signal übereinstimmend zu modifizieren; oder

(b) bei der die Standortklassifizierungsmittel (76) benutzerdefinierte Klassifizierungsmittel (92) zur Eingabe digitaler Signale aufweisen, die benutzerdefinierte Standortklassifikationen repräsentieren, und bei der beispielsweise

die Standortklassifizierungsmittel (76) benutzerdefinierte Klassifizierungsänderungsmittel (92) zur Modifizierung eines digitalen Signals aufweisen, das eine Standortklassifikation verbunden mit einer physischen Häufigkeit eines Betriebsmittels repräsentiert.

**15.** Digitale Datenverarbeitungsvorrichtung nach Anspruch 12,

(a) aufweisend

A. Einteilungcharakteristikmittel (68), die mit den Resourcenmitteln (39) zur Erzeugung eines Ausgleichs-/Nicht-Ausgleichssignales verbunden sind, das die Einteilungcharakteristik eines Betriebsmittels repräsentiert, und

B. Ausgleichs-/Nicht-Ausgleichsmittel (70), die mit den Einteilungcharakteristikmitteln (68) und den Ausgabemitteln gekoppelt sind und auf das Ausgleichs-/Nicht-Ausgleichssignal zur selektiven Einteilung der physischen Häufigkeit eines Betriebsmittels reagiert; oder

(b) bei der die Ressourcenmittel (39) aufweisen

A. Mittel (88) zur Eingabe eines digitalen Signales, das eine Standardmaßeinheit verbunden mit einem Betriebsmittel repräsentiert,

B. Mittel (90) zur Eingabe eines digitalen Signales, das eine Durchführungsmaßeinheit verbunden mit einer physischen Häufigkeit des gleichen Betriebsmittels repräsentiert,

C. Mittel (86) zur Eingabe eines digitalen Signales, das den Umrechungsfaktor zum Umrechnen einer Menge der physischen Häufigkeit des Betriebsmittels zwischen der Standardmaßeinheit verbunden mit dem Betriebsmittel und der Durchführungsmaßeinheit verbunden mit der physischen Häufigkeit des Betriebsmittels repräsentiert, und

D. Mittel (72) zur Eingabe eines digitalen Signales, das eine Menge, die durch die Durchführungsmaßeinheit ausdrückbar ist, verbunden mit einer physischen Häufigkeit des Betriebsmittels repräsentiert, und zur Umrechnung dieser Menge in ein digitales Signal, das eine äquivalente Menge, die durch die Standardmaßeinheit ausdrückbar ist, verbunden mit dem Betriebsmittel repräsentiert, und zur Erzeugung eines dafür repräsentativen Signales; oder

(c) bei der die Resourcenmittel (39) aufweisen

A. Mittel (88) zur Eingabe digitaler Signale, die eine Standardmaßeinheit verbunden mit einem Betriebsmittel repräsentieren,

B. Mittel (90) zur Eingabe eines digitalen Signales, das eine Durchführungsmaßeinheit verbunden mit einem Speicherungsstandort zur Speicherung einer physischen Häufigkeit eines Betriebsmittels repräsentiert,

C. Mittel (86) zur Eingabe eines digitalen Signales, das den Umrechungsfaktor zum Umrechnen einer Menge zwischen der Durchführungsmaßeinheit verbunden mit dem Speicherungastandort und der Standardmaßeinheit verbunden mit dem an dem Speicherungsstandort gespeicherten Betriebsmittel repräsentiert,

D. mit den Faktormitteln verbundene Mittel (72) zur Eingabe eines digitalen Signales, das eine Menge, die durch die Durchführungsmaßeinheit ausdrückbar und mit der Speicherung einer physischen Häufigkeit eines Betriebsmittels verbunden ist, repräsentiert, und zur Umrechnung dieser Menge in ein digitales Signal, das eine äquivalente Menge repräsentiert, die durch die Standardmaßeinheit ausdrückbar ist, und zur Erzeugung eines dafür repräsentativen Signales; oder

(d) bei der die Ressourcenmittel (39) aufweisen

A. Mittel (96) zur Eingabe eines digitalen Signales, das eine theoretische Menge bei einem vorherbestimmten Einflußpegel eines verbrauchten Betriebsmittels repräsentiert, das für die Produktion eines erzeugten Betriebsmittels benötigt wird,

B. Mittel (94) zur Eingabe eines digitalen Signales, das einen Einflußprozentsatz einer Menge einer physischen Häufigkeit des verbrauchten Betriebsmittels repräsentiert,

C. Mittel (78) zur Eingabe eines digitalen Signales, das eine physische Menge der physischen Häufigkeit der verbrauchten Betriebsmittel repräsentiert, die für die Produktion benötigt werden, wobei das die physische Menge benötigende Signal bezüglich des Einflußprozentsatzes ausgedrückt wird und auf dem vorherbestimmten Einflußpegel basiert; oder

(e) bei der die Ressourcenmittel (39) aufweisen

A. Mittel (98) zur Eingabe digitaler Signale, die die Einteilungserfordernisse für ein in dem Herstellungsverfahren verbrauchten Betriebsmittel repräsentieren, und zur Erzeugung eines Signals der Einteilungserfordernis, das repräsentativ dafür ist,

B. Mittel (100) zur Eingabe eines digitalen Signals, das eine auf Einteilung basierende Charakteristik einer physischen Häufigkeit des Betriebsmittels repräsentiert, und zur Erzeugung eines dafür repräsentativen einteilungsmeldenden Signales,

C. Mittel (80), die auf das Einteilungserfordernis-Signal und das einteilungsmeldende Signal reagieren, um ein digitales Signal zu erzeugen, das anzeigt, ob die physische Häufigkeit des Betriebsmittels ein Anwärter zur Benutzung in dem Herstellungsverfahren ist.

**16.** Verfahren zum Betreiben einer digitalen Datenverarbeitungsvorrichtung (5) zur Steuerung eines Herstellungsverfahrens, das folgende Schritte aufweist:

A. Eingeben digitaler Signale, die ein oder mehrere Betriebsmittel repräsentieren, die in einem Herstellungsverfahren verbraucht werden,

B. Eingeben digitaler Signale, die ein oder mehrere Betriebsmittel repräsentieren, die in einem Herstellungsverfahren erzeugt werden,

C. Erzeugen von Ausgabesignalen, die repräsentativ für zumindest ausgewählte Bereiche des Herstellungsverfahrens sind, umfassend die damit verbundenen Herstellungsbezichungen, wobei die Herstellungsbeziehungen zumindest eine operative Beziehung, eine organisatorische Beziehung oder eine finanzielle Beziehung umfassen,

D. Eingeben digitaler Signale, die eine oder mehrere während des Herstellungsverfahrens durchgeführte Arbeiten repräsentieren, wobei jedes Signale umfaßt, die (i) ein oder mehrere durch die Arbeit verbrauchte Betriebsmittel, (ii) ein oder mehrere durch die Arbeit erzeugte Betriebsmittel, (iii) eine oder mehrere während des Arbeitsverlaufes durchgeführte Produktionsoperationen und (iv) Herstellungsbeziehungen zwischen der Arbeit und einer oder mehreren anderen Arbeiten repräsentieren, und

E. Erzeugen und Speichern eines Produktionsmodells, das dad Herstellungsverfahren repräsentiert und die arbeitrepräsentierenden Signale umfaßt, die die während des Verfahrens durchgeführten Arbeiten repräsentieren, wobei jedes arbeitrepräsentierende Signal Signale umfaßt, die (i) ein oder mehrere durch die damit verbundene Arbeit verbrauchte Betriebsmittel, (ii) ein oder mehrere durch die damit verbundene Arbeit erzeugte Betriebsmittel, (iii) eine oder mehrere während des damit verbundenen Arbeitsverlaufs durchgeführte Produktionsoperationen und (iv) Herstellungsbeziehungen zwischen der damit verbundenen Arbeit und einer oder mehreren anderen Arbeiten repräsentieren, wobei die arbeitrepräsentierenden Signale Herstellungsbeziehungen zwischen durch jede Arbeit und durch das Herstellungsverfahren auf jeder der folgenden Grundlagen

i) eins zu eins,

ii) eins zu mehreren,

iii) mehrere zu eins,

iv) mehrere zu mehreren,

verbrauchten und erzeugten Betriebsmitteln repräsentieren.

**17.** Verfahren zum Betreiben einer digitalen Datenverarbeitungsvorrichtung nach Anspruch 16,

(a) ferner aufweisend den Schritt des Erzeugens eines digitalen Signals, das repräsentativ für zumindest die Produktion, die Ergiebigkeit, den Verbrauch, den Wert oder Variationen dabei an ausgewählten Betriebsmitteln ist; oder

(b) das ferner die Schritte aufweist

A. Eingeben eines digitalen Signales, das eine oder mehrere Arbeit(en) repräsentiert, die während des Herstellungsverfahrens durchgeführt werden, und

B. Reagieren auf das arbeitrepräsentierende Signal zur Erzeugung und Speicherung eines Signales, das repräsentativ für wenigstens einen der folgenden Punkte ist:

i) ein oder mehrere durch die Arbeit verbrauchte(s) Betriebsmittel,

ii) ein oder mehrere durch die Arbeit erzeugte(s) Betriebsmittel,

iii) eine oder mehrere während des Arbeitsverlaufs durchgeführte Produktionsoperation(en), und

iv) Herstellungsbeziehungen zwischen der Arbeit und einer oder mehreren anderen Arbeiten; oder

(c) ferner aufweisend den Schritt des Erzeugens eines digitalen Signales, das definiert, daß ein durch eine Arbeit erzeugtes Betriebsmittel ein Betriebsmittel ist, das durch die gleiche Arbeit oder eine andere Arbeit verbraucht wird.

**18.** Verfahren zum Betreiben einer digitalen Datenverarbeitungsvorrichtung nach Anspruch 16, ferner aufweisend den Schritt des Erzeugens eines digitalen Signals, das die mit mindestens einem verbrauchten Betriebsmittel, einem erzeugten Betriebsmittel und einer Arbeit verbundenen Kosten repräsentiert und beispielsweise den weiteren Schritt des Erzeugens eines digitalen Signales aufweist, das eine Kostenaufrechnung verbunden mit einer oder mehreren Arbeiten des Herstellungsprozesses repräsentiert.

**19.** Verfahren zum Betreiben einer digitalen Datenverarbeitungsvorrichtung nach Anspruch 18, ferner aufweisend den Schritt des Eingebens eines digitalen Signales, das die mit einem oder mehreren in dem Herstellungsverfahren verbrauchten Betriebsmitteln verbundenen Kosten repräsentiert.

**20.** Verfahren zum Betreiben einer digitalen Datenverarbeitungsvorrichtung nach Anspruch 19, ferner aufweisend den Schritt des Erzeugens eines digitalen Signales, das die mit jeder der Vielzahl von Betriebsmitteln verbunden mit einer der Arbeiten verbundene Kastenverteilung repräsentiert, und beispielsweise den weiteren Schritt des Erzeugens eines digitalen Signales aufweist, das einen brauchbaren Nettowert eines oder mehrerer durch eine Arbeit hergestellten Betriebsmittels repräsentiert.

**21.** Verfahren zum Betreiben einer digitalen Datenverarbeitungsvorrichtung nach Anspruch 16,

(a) ferner aufweisend den Schritt des Erkeugens eines digitalen Signales, das zumindest ein Produktionsmodell als ein Hauptmodell und andere Produktionsmodelle definiert, wobei die anderen Produktionsmodelle von dem Hauptproduktionsmodell abhängig sind, wobei jedes abhängige Produktionsmodell ein oder mehrere verbrauchte Betriebsmittel gemeinsam mit einem entsprechenden verbrauchten Betriebsmittel verbunden mit dem Hauptproduktionsmodell hat; oder

(b) ferner aufweisend den Schritt des Erzeugens eines digitalen Signales, das den Typ des Produktionsmodells repräsentiert, und zur Verbindung des den Typ des Produktionsmodells repräsentierenden Signals mit einem oder mehreren Produktionsmodellen, die ähnliche operative, finanzielle oder organisatorische Charakteristika haben; oder

EP 0 490 890 B1

(c) ferner aufweisend die Schritte

A. Eingeben eines Signales, das die Menge eines oder mehrerer durch das Herstellungsverfahren erzeugter Betriebsmittel repräsentiert, und

B. Erzeugen eines digitalen Signales, das die Menge eines oder mehrerer durch das Herstellungsverfahren verbrauchter Betriebsmittel bei der Produktion der erzeugten Betriebsmittel repräsentiert, und beispielsweise den weiteren Schritt des Erzeugens eines digitalen Signales, das eine Produktionsverteilung verbunden mit jedem der Vielzahl der durch eine oder mehrere Arbeiten erzeugten Betriebsmittel repräsentiert; oder

(d) ferner aufweisend die Schritte

A. Eingeben eines digitalen Signales, das eine Menge eines ersten durch das Herstellungsverfahren erzeugten Betriebsmittels repräsentiert, und

B. Erzeugen eines digitalen Signales, das eine Menge von einem oder mehreren anderen Betriebsmitteln repräsentiert, die durch das Herstellungsverfahren in Verbindung mit der Produktion des ersten Betriebsmittels erzeugt wurden, und beispielsweise den weiteren Schritt des Erzeugens eines digitalen Signales, das eine Produktionsverteilung verbunden mit jedem der Vielzahl der durch eine oder mehrere Arbeiten hergestellten Betriebsmittel repräsentiert; oder

(e) ferner aufweisend die Schritte

A. Eingeben eines digitalen Signales, das eine temporäre oder volumetrische Ausgabe eines Produktiondurchlaufes entsprechend dem Produktionsmodell repräsentiert,

B. Eingeben eines digitalen Signales, das eine temporäre oder volumetrische Ausgabe einer Arbeitsmenge dargestellt, die durch eine mit dem Produktionsmodell verbundene Arbeit repräsentiert wird,

C. Eingeben eines digitalen Signales, das eine mathematische Beziehung zwischen der Ausgabe des Produktionsdurchuaufes und der Ausgabe der Arbeitsmenge repräsentiert, und

D. Erzeugen eines digitalen Signales, das eine Anzahl der Arbeitsmengen repräsentiert, die zur Vervollständigung des Produktionadurchlaufes notwendig sind; oder

(f) ferner aufweisend die Schritte

A. Eingeben eines digitalen Signales, das einen Typ einer quantitativen Beziehung zwischen einem durch eine Arbeit verbrauchten Betriebsmittel und einem oder mehreren durch die gleiche Arbeit erzeugten Betriebsmitteln,

B. Reagieren auf das den Typ der quantitativen Beziehung repräsentierende Signal zur selektiven Erzeugung eines digitalen Signales, das entweder

i. eine lineare quantitative Beziehung zwischen dem verbrauchten Betriebsmittel und dem einen oder mehreren erzeugten Betriebsmitteln, oder

ii. eine stufenartige Funktionsbeziehung zwischen dem verbrauchten Betriebsmittel und dem einen oder mehreren erzeugten Betriebsmitteln

repräsentiert; oder

(g) ferner aufweisend die Schritte

A. Eingeben eines anzeigbaren Arbeitssignales, das anzeigt, ob Mengen eines durch eine Arbeit erzeugten Betriebsmittels anzeigbar sind, und

44

B. Reagieren auf das anzeigbare Arbeitssignal zum selektiven Akzeptieren der digitalen Eingabesignale, die die Mengen von durch die Arbeit erzeugten Betriebsmitteln repräsentieren, oder

(h) ferner aufweisend die Schritte

A. Eingeben und Speichern eines digitalen Signales, das die Menge einer physischen Häufigkeit eines verbrauchten Betriebsmittels repräsentiert, das in dem Herstellungsverfahren zur Benutzung zur Verfügung steht,

B. Modifizieren des gespeicherten mengenrepräsentierenden Signales, um eine Menge des während des Herstellungsverfahrens verbrauchten Betriebsmittels wiederzugeben,

C. Erzeugen eines digitalen Signales, das Mengen der durch das Herstellungsverfahren verbrauchten Betriebsmittel bei der Produktion der Betriebsmittel ohne Modifizierung des gespeicherten mengenrepräsentierenden Signales repräsentiert, oder

(i) ferner aufweisend die Schritte

A. Eingeben eines digitalen Signales, das eine Menge eines verbrauchten Betriebsmittel repräsentiert, das in einer Arbeit verbunden mit dem Produktionsmodell benutzt wurde,

B. Eingeben eines digitalen Signales, das eine Zeitdauer einer Operation verbunden mit dieser Arbeit repräsentiert, und

C. Erzeugen eines digitalen Signales um eine Beziehung zwischen einer Menge eines bei der Arbeit verbrauchten Betriebsmittels und der Zeitdauer einer Operation verbunden mit der Arbeit aufzustellen.

**22.** Verfahren zum Betreiben einer digitalen Datenverarbeitungsvorrichtung nach Anspruch 16, ferner aufweisend den Schritt des Erzeugens und Speichern eines digitalen Signales, das eine mit zumindest einem der Betriebsmittel verbundene Produktionscharakteristik repräsentiert, wobei die Produktionscharakteristik ein oder mehrere finanzielle, operative, organisatorische und die Einteilung betreffende Attribute des Betriebsmittels umfaßt.

**23.** Verfahren zum Betreiben einer digitalen Datenverarbeitungsvorrichtung nach Anspruch 22, ferner aufweisend den Schritt des Erzeugens eines digitalen Signales, das eine oder mehrere Betriebsmittel mit ähnlichen Produktionscharakteristika definiert.

**24.** Verfahren zum Betreiben einer digitalen Datenverarbeitungsvorrichtung nach Anspruch 22, ferner aufweisend den Schritt des Erzeugens eines digitalen Signales, das eine Standortklassifikation verbunden mit einer physischen Häufigkeit eines Betriebsmittels repräsentiert, wobei die Standortklassifikation eine oder mehrere Produktionscharakteristika umfaßt.

**25.** Verfahren zum Betreiben einer digitalen Datenverarbeitungsvorrichtung nach Anspruch 24,

(a) ferner aufweisend den Schritt des Modifizierens eins digitalen Signales, das eine oder mehrere Produktionscharakteristika verbunden mit einer physischen Häufigkeit eines Betriebsmittels repräsentiert, und beispielsweise
ferner aufweisend den Schritt des Modifizierens eines digitalen Signales, das eine physische Häufigkeit eines Betriebsmittels repräsentiert, um eine physische Häufigkeit eines anderen Betriebsmittels zu repräsentieren und um ein oder mehrere die Produktionscharakteristik repräsentierende Signale verbunden mit dem die physische Häufigkeit repräsentierenden Signal übereinstimmend zu modifizieren; oder

(b) ferner aufweisend den Schritt des Eingebens eines digitalen Signales, das eine benutzerdefinierte Srandortklassifikation repräsentiert, und beispielsweise ferner aufweisend den Schritt des Modifizierens einer benutzerdefinierten Standortklassifikation verbunden mit einer physischen Häufigkeit des Betriebamittels.

**26.** Verfahren zum Betreiben einer digitalen Datenverarbeitungsvorrichtung nach Anspruch 23, ferner aufweisend die Schritte

A. Erzeugen eines Ausgleichs-/Nicht-Ausgleichssignales, das die Einteilungcharakteristik eines Betriebsmittels repräsentiert, und

B. Reagieren auf das Ausgleichs-/Nicht-Ausgleichssignal zur selektiven Einteilung der physischen Häufigkeit eines Betriebsmittels.

27. Verfahren zum Betreiben einer digitalen Datenverarbeitungsvorrichrung nach Anspruch 22,

(a) ferner aufweisend die Schritte

A. Eingeben eines digitalen Signales, das eine Standardmaßeinheit verbunden mit einem Betriebsmittel repräsentiert,

B. Eingeben eines digitalen Signales, das eine Durchführungsmaßeinheit vebunden mit einer physischen Häufigkeit des Betriebsmittels repräsentiert,

C. Eingeben eines digitalen Signales, das den Umrechungsfaktor zum Umrechnen einer Menge der physischen Häufigkeit des Betriebsmittels zwischen der Standardmaßeinheit verbunden mit dem Betriebsmittel und der Durchführungsmaßeinheit verbunden mit der physischen Häufigkeit des Betriebsmittels repräsentiert, und

D. Eingeben eines digitalen Signales, das eine Menge, die durch die Durchführungswaßeinheit ausdrückbar ist, verbunden mit einer physischen Häufigkeit des Betriebemittels repräsentiert, und

E. Umrechnen das mengenrepräsentierenden Signales in ein digitales Signal, das eine äquivalente Menge, die durch die Standardmaßeinheit ausdrückbar ist, verbunden mit dem Betriebsmittel repräsentiert, und zur Erzeugung eines dafür repräsentativen Signales; oder

(b) ferner aufweisend die Schritte

A. Eingeben eines digitalen Signales, das eine Standardmaßeinheit verbunden mit einem Betriebsmittel repräsentiert,

B. Eingeben eines digitalen Signales, das eine Durchführungsmaßeinheit verbunden mit einem Speicherungsstandort zur Speicherung einer physischen Häufigkeit eines Betriebsmittels repräsentiert,

C. Eingeben eines digitalen Signales, das den Umrechungsfaktor zum Umrechnen einer Menge zwischen der Durchführungsmaßeinheit verbunden mit dem Speicherungastandort und der Standardmaßeinheit verbunden mit dem an dem Speicherungsstandort gespeicherten Betriebsmittel repräsentiert,

D. Eingeben eines digitalen Signales, das eine Menge, die durch die Durchführungsmaßeinheit ausdrückbar und mit der Speicherung einer physischen Häufigkeit eines Betriebsmittels verbunden ist, repräsentiert,

E. Umrechnen der Menge in eine äquivalente Menge, die durch die Standardmaßeinheit ausdrückbar ist, und zur Erzeugung eines dafür repräsentativen Signales; oder

(c) ferner aufweisend die Schritte

A. Eingeben eines digitalen Signales, das eine theoretische Menge bei einem vorherbestimmten Niveau eines verbrauchten Betriebsmittels repräsentiert, das für die Produktion eines erzeugten Betriebsmittels benötigt wird,

B. Eingeben eines digitalen Signales, das einen Einflußprozentsatz einer Menge einer physischen Häufigkeit des verbrauchten Betriebsmittels repräsentiert,

C. Erzeugen eines digitalen Signales, das eine physische Menge der physischen Häufigkeit des verbrauchten Betriebsmittels repräsentiert, das für die Produktion benötigt wird, wobei das die physische Menge benötigende Signal bezüglich des Einflußprozentsatzes ausgedrückt wird und auf dem vorherbestimmten Einflußpegel basiert; oder

(d) ferner aufweisend die Schritte

A. Eingeben eines digitalen Signales, das ein Einteilungserfordernis für ein in dem Herstellungsverfahren verbrauchtes Betriebsmittel repräsentiert, und zur Erzeugung eines Signales der Einteilungserfordernis, das repräsentativ dafür ist,

B. Eingeben eines digitalen Signals, das eine auf Einteilung basierende Charakteristik einer physischen Häufigkeit des Betriebsmittels repräsentiert, und zur Erzeugung eines dafür repräsentativen einteilungsmeldenden Signales,

C. Reagieren auf das Einteilungserfordernis-Signal und das einteilungameldende Signal, um ein digitales Signal zu erzeugen, das anzeigt, ob die physische Häufigkeit des Betriebsmittels ein Anwärter zur Benutzung in dem Herstellungsverfahren ist.

## Revendications

1. Appareil (5) de traitement de données numériques pour une commande de procédé de fabrication, comprenant :

A. un premier moyen (20) d'entrée pour l'introduction de signaux numériques représentatifs d'un ou plusieurs éléments de ressource consommés au cours d'un procédé de fabrication,
B. Un deuxième moyen (22) d'entrée pour l'introduction de signaux numériques représentatifs d'un ou plusieurs éléments de ressource produits par ledit procédé de fabrication,
C. un moyen (36) de sortie couplé avec les premier et deuxième moyens d'entrée, pour générer des signaux de sortie représentatifs d'au moins des parties sélectionnées dudit procédé de fabrication, comportant des relations de fabrication associées avec ceux-ci, lesdites relations de fabrication comportant au moins une relation parmi une relation opérationnelle, une relation de planification, et une relation financière,
D. un troisième moyen (24) d'entrée pour l'introduction de signaux numériques représentant une ou plusieurs tâches effectuées au cours dudit procédé de fabrication, chacune comportant des signaux représentant (i) un ou plusieurs éléments de ressource consommés par la tâche, (ii) un ou plusieurs éléments de ressource produits par la tâche, (iii) une ou plusieurs opérations de production effectuées au cours de la tâche, et (iv) des relations de fabrication entre la tâche et une ou plusieurs autres tâches, et
E. un moyen (28) de modélisation de production, couplé avec lesdits premier, deuxième et troisième moyens d'entrée, pour générer et stocker un modèle de production représentant ledit procédé de fabrication et comportant des signaux représentatifs de tâches représentant les tâches effectuées au cours de ce procédé, chaque signal représentatif de tâche comportant des signaux représentant (i) un ou plusieurs éléments de ressource consommés par la tâche associée, (ii) un ou plusieurs éléments de ressource produits par la tâche associée, (iii) une ou plusieurs opérations de production effectuées au cours de la tâche associée, et (iv) des relations de fabrication entre la tâche associée et une ou plusieurs autres tâches, à la suite de quoi lesdits signaux représentatifs de tâches représentent des relations de fabrication entre des ressources consommées et produites par chaque tâche et par le procédé de fabrication sur l'une quelconque des bases suivantes

i) un à un,
ii) un à plusieurs,
iii) plusieurs à un,
iv) plusieurs à plusieurs.

2. Appareil de traitement de données numériques selon la revendication 1,

(a) dans lequel ledit moyen de sortie (3b) comprend un moyen pour générer des signaux numériques représentatifs d'au moins une valeur parmi une valeur de production, de rendement, de consommation, de composition et de variation dans celle-ci, d'éléments sélectionnés parmi lesdits éléments de ressource ; ou
(b) dans lequel

A. ledit troisième moyen (24) d'entrée comporte un moyen (26) de définition de tâche pour introduire des signaux numériques représentatifs d'une ou plusieurs tâches effectuées au cours dudit procédé de fabrication, et

B. ledit moyen (28) de modélisation de production comporte un moyen (32) de stockage de tâche, sensible audit signal représentatif de tâche, pour générer et stocker des signaux numériques représentatifs d'un ou plusieurs éléments parmi

    i) un ou plusieurs éléments de ressource consommés par une tâche,
    ii) un ou plusieurs éléments de ressource produits par une tâche,
    iii) une ou plusieurs opérations de production effectuées au cours d'une tâche, et
    iv) des relations de fabrication entre la tâche associée et une ou plusieurs autres tâches ; ou

C. dans lequel ledit moyen (28) de modélisation de production comprend un moyen pour générer un signal numérique indiquant qu'un élément de ressource produit par une tâche sert d'élément de ressource consommé par la même tâche ou une autre tâche.

**3.** Appareil de traitement de données numériques selon la revendication 1, dans lequel ledit moyen de sortie (36) comporte un moyen (38) de calcul de coût pour générer un signal numérique représentatif d'un coût associé avec au moins l'une d'une ressource consommée, d'une ressource produite et d'une tâche.

**4.** Appareil de traitement de données numériques selon la revendication 3,

(a) dans lequel ledit moyen (38) de calcul de coût comporte un moyen (42) de roulement de coût pour générer un signal numérique représentatif d'un roulement de coût s'ajoutant au coût de toutes les ressources consommées utilisées dans une ressource de production, associé avec une ou plusieurs desdites tâches ; ou
(b) dans lequel

A. ledit moyen (20) d'entrée comprend un moyen pour introduire des signaux numériques représentatifs de coûts associés avec un ou plusieurs éléments de ressource consommés dans ledit procédé de fabrication, et
B. ledit moyen (38) de calcul de coût comprend un moyen (44) pour générer un signal numérique représentatif d'une répartition de coût, associé avec chacune de plusieurs ressources associées avec ladite tâche ; ou
C. dans lequel ledit moyen (38) de calcul de coût comprend un moyen (46) pour générer un signal numérique représentatif d'une valeur nette réalisable d'un ou plusieurs éléments de ressource produits par une tâche sélectionnée.

**5.** Appareil de traitement de données numériques selon la revendication 1,

(a) comprenant un moyen (38) couplé avec ledit moyen (28) de modélisation de production pour générer un signal numérique définissant un premier desdits modèles de production en tant que modèle de production principal et pour définir lesdits autres modèles de production comme étant dépendants dudit modèle de production principal, ledit modèle de production dépendant ayant en commun avec ledit modèle de production principal des tâches et des éléments de ressource produits ; ou
(b) dans lequel ledit moyen (28) de modélisation de production comporte un moyen pour générer un signal numérique représentatif d'un type de modèle de production et pour associer ce signal représentatif de type de modèle de production avec un ou plusieurs modèles de production ayant des caractéristiques opérationnelles, financières ou de planification, similaires.

**6.** Appareil de traitement de données numériques selon la revendication 1, dans lequel

A. ledit deuxième moyen (22) d'entrée comporte un moyen pour l'introduction de signaux numériques représentatifs de quantités d'un ou plusieurs éléments de ressource produits par ledit procédé de fabrication, et
B. ledit moyen de sortie comporte un moyen (54) de consommation théorique pour générer un signal numérique représentatif d'une quantité d'un ou plusieurs éléments de ressource consommés par ledit procédé de fabrication lors de la production d'un ou plusieurs éléments de ressource produits, et
    dans lequel, par exemple, ledit moyen (54) de consommation théorique comporte un moyen (58) pour générer un signal numérique représentatif d'une répartition de production associée avec chacune de plusieurs ressources produites par une ou plusieurs desdites tâches.

**7.** Appareil de traitement de données numériques selon la revendication 1, dans lequel

A. ledit deuxième moyen (22) d'entrée comporte un moyen pour l'introduction de signaux numériques représentatifs de quantités d'un ou plusieurs éléments de ressource produits par une tâche associée avec ledit procédé de fabrication, et

B. ledit moyen de sortie comporte un moyen (50) de production théorique pouvant fonctionner de manière sélective pour générer un signal numérique représentatif d'une quantité d'un ou plusieurs éléments de ressource produits par la même tâche.

**8.** Appareil de traitement de données numériques selon la revendication 7,

(a) dans lequel ledit moyen (50) de production théorique comporte un moyen (58) pour générer un signal numérique représentatif d'une répartition de production associée avec chacune de plusieurs ressources produites par une ou plusieurs desdites tâches ; ou

(b) dans lequel ledit troisième moyen (24) d'entrée comprend un moyen pour l'introduction d'un signal numérique indiquant si des quantités de ressources produites par une tâche peuvent être rapportées, et

B. ledit appareil de traitement de données numériques comprend en outre un moyen (60) de tâche pouvant être rapportée, connecté avec ledit troisième moyen (24) d'entrée pour valider de manière sélective ledit moyen de production théorique et pour, selon une variante, accepter des signaux numériques d'entrée représentatifs d'une quantité d'une ou plusieurs ressources produites par la tâche.

**9.** Appareil de traitement de données numériques selon la revendication 1,

(a) dans lequel

A. ledit troisième moyen (24) d'entrée comprend

i) un moyen pour l'introduction d'un signal numérique représentatif d'une sortie temporelle ou volumétrique d'une période de production correspondant à un modèle de production,

ii) un moyen pour l'introduction d'un signal numérique représentatif d'une sortie temporelle ou volumétrique d'une série de tâches correspondant à une tâche associée avec ledit modèle de production,

iii) un moyen pour l'introduction d'un signal numérique représentatif d'une relation mathématique entre ladite sortie de période de production et ladite sortie de série de tâches, et

B. ledit moyen de sortie comporte un moyen (40) de série de tâches pour générer un signal numérique représentatif d'un certain nombre de séries de tâches nécessaires pour compléter ladite période de production; ou

(b) dans lequel

A. ledit troisième moyen (24) d'entrée comporte un moyen pour l'introduction de signaux numériques représentatifs d'un type de relation quantitative entre un élément de ressource consommé par une tâche et une ou plusieurs ressources produites par cette même tâche,

B. ledit moyen de sortie comporte un moyen (52) de consommation en série/linéaire sensible audit signal représentatif de type de relation quantitative pour générer de manière sélective un signal numérique représentatif, soit

i. d'une relation linéaire quantitative entre ladite ressource consommée et ladite ou lesdites une ou plusieurs ressource(s) produite(s), ou

ii. d'une relation de fonction échelon entre ladite ressource consommée et ladite ou lesdites une ou plusieurs ressource(s) produite(s).

**10.** Appareil de traitement de données numériques selon la revendication 6, dans lequel

A. ledit premier moyen (20) d'entrée comprend un moyen d'inventaire pour l'introduction et le stockage d'un signal numérique représentatif d'une quantité d'apparition physique d'un élément de ressource consommé disponible pour être utilisé dans ledit procédé de fabrication,

**EP 0 490 890 B1**

B. ledit moyen (54) de consommation théorique comporte un moyen (56) pour modifier ledit signal représentatif de quantité stockée pour refléter une quantité dudit élément de ressource consommé au cours dudit procédé de fabrication,

C. ledit moyen de sortie comprend un moyen (48) de coût calculé pour générer un signal numérique représentatif d'une quantité dudit élément de ressource consommé par ledit procédé de fabrication lors de la production desdits éléments de ressource sans modifier ledit signal représentatif de quantité stockée.

**11.** Appareil de traitement de données numériques selon la revendication 1, dans lequel

A. ledit troisième moyen (24) d'entrée comprend

i) un moyen pour l'introduction d'un signal numérique représentatif d'une quantité d'un élément de ressource consommé dans une tâche,
ii) un moyen pour l'introduction d'un signal numérique représentatif d'une durée temporelle d'une opération associée avec cette même tâche, et

B. ledit moyen de sortie comprend un moyen (34) de dépendance d'opération de ressource pour générer un signal numérique établissant une relation entre une quantité dudit élément de ressource consommé et la durée temporelle de ladite opération pour des ressources et opérations sélectionnées parmi lesdites ressources consommées et lesdites opérations.

**12.** Appareil de traitement de données numériques selon la revendication 1, comprenant en outre un moyen de ressource connecté avec lesdits premier et deuxième moyens (39) d'entrée pour générer et stocker un signal numérique représentatif d'une caractéristique de production associée avec au moins l'un desdits éléments de ressource, ladite caractéristique de production comportant un ou plusieurs attributs parmi un attribut financier, opérationnel, de planification et de suivi dudit au moins un élément de ressource.

**13.** Appareil de traitement de données numériques selon la revendication 12,

(a) dans lequel ledit moyen de ressource comprend un moyen (74) de classe/sous-classe pour générer un signal numérique définissant une ou plusieurs desdites ressources comme ayant des caractéristiques de production similaires ; ou
(b) dans lequel ledit moyen (39) de ressource comprend un moyen (76) de classement d'emplacement pour générer un signal numérique représentant un classement d'emplacement associé avec une apparition physique d'un élément de ressource, ledit classement d'emplacement comportant une ou plusieurs desdites caractéristiques de production.

**14.** Appareil de traitement de données numériques selon la revendication 13,

(a) comprenant en outre un moyen (66) de transaction connecté audit moyen de ressource pour modifier un signal numérique représentatif d'une ou plusieurs caractéristiques de production associées avec une apparition physique d'un élément de ressource, et par exemple
dans lequel ledit moyen de transaction (66) comprend un moyen (82) de changement de ressource pour modifier un signal numérique qui représente une apparition physique d'un élément de ressource pour représenter une apparition physique d'un autre élément de ressource et pour modifier, simultanément, un ou plusieurs signaux représentatifs de caractéristique de production associé(s) avec le signal représentatif d'apparition physique modifié; ou
(b) dans lequel ledit moyen (76) de classement d'emplacement comprend un moyen (92) de classement défini par l'utilisateur pour l'introduction de signaux numériques représentatifs de classements d'emplacements définis par l'utilisateur, et, par exemple,
dans lequel ledit moyen (76) de classement d'emplacement comprend un moyen (92) de changement de classement défini par l'utilisateur pour modifier une représentation de signal numérique d'un classement d'emplacement associé avec un élément de ressource d'apparition physique.

**15.** Appareil de traitement de données numériques selon la revendication 12,

(a) comprenant

A. un moyen (68) de caractéristique de suivi couplé avec ledit moyen (39) de ressource pour générer un signal d'équilibre/non équilibre représentatif d'une caractéristique de suivi d'un élément de ressource, et

B. un moyen (70) d'équilibre/non équilibre, couplé avec ledit moyen de caractéristique de suivi et avec ledit moyen de sortie, et sensible audit signal d'équilibre/non équilibre pour suivre des apparitions physiques d'un élément de ressource ; ou

(b) dans lequel ledit moyen (39) de ressource comprend

A. un moyen (88) pour l'introduction d'un signal numérique représentatif d'une unité standard de mesure associée avec un élément de ressource,

B. un moyen (90) pour l'introduction d'un signal numérique représentatif d'une unité de transaction de mesure associée avec une apparition physique de ce même élément de ressource,

C. un moyen (86) pour l'introduction d'un signal numérique représentatif d'un facteur de conversion pour convertir une quantité d'une apparition physique de l'élément de ressource entre l'unité standard de mesure associée avec l'élément de ressource et l'unité de transaction de mesure associée avec l'apparition physique de l'élément de ressource, et

D. un moyen (72) pour l'introduction d'un signal numérique représentatif d'une quantité exprimable dans l'unité de transaction de mesure associée avec une apparition physique de l'élément de ressource et pour convertir cette quantité en un signal numérique représentatif d'une quantité équivalente exprimable dans l'unité standard de mesure associée avec l'élément de ressource et pour générer un signal représentatif de ceci ; ou

(c) dans lequel ledit moyen (39) de ressource comprend

A. un moyen (88) pour l'introduction de signaux numériques représentatifs d'une unité standard de mesure associée avec un élément de ressource,

B. un moyen (90) pour l'introduction d'un signal numérique représentatif d'une unité de transaction de mesure associée avec un emplacement de stockage pour stocker une apparition physique d'un élément de ressource,

C. un moyen (86) pour l'introduction d'un signal numérique représentatif d'un facteur de conversion pour convertir une quantité entre l'unité de transaction de mesure associée avec l'emplacement de stockage et l'unité standard de mesure associée avec un élément de ressource stocké dans l'emplacement de stockage,

D. un moyen (72) connecté avec ledit moyen de facteur pour l'introduction d'un signal numérique représentatif d'une quantité exprimable dans l'unité de transaction de mesure et associée avec le stockage d'une apparition physique d'un élément de ressource et pour convertir cette quantité en un signal numérique représentatif d'une quantité équivalente exprimable dans l'unité standard de mesure et pour générer un signal représentatif de ceci ; ou

(d) dans lequel ledit moyen (39) de ressource comprend

A. un moyen (96) pour l'introduction d'un signal numérique représentatif d'une quantité théorique à un niveau de potentiel prédéterminé, d'un élément de ressource consommé nécessaire pour la production d'un élément de ressource produit,

B. un moyen (94) pour l'introduction d'un signal numérique représentatif d'une quantité de pourcentage de potentiel d'une apparition physique dudit élément de ressource consommé,

C. un moyen (78) pour générer un signal numérique représentatif d'une quantité physique de ladite apparition physique dudit élément de ressource consommé nécessaire pour une production, ledit signal nécessaire pour une quantité physique étant exprimé en termes dudit pourcentage de potentiel et étant fondé sur le niveau de potentiel prédéterminé ; ou

(e) dans lequel ledit moyen (39) de ressource comprend

A. un moyen (98) pour l'introduction de signaux numériques représentatifs d'exigences de qualité pour un élément de ressource consommé dans le procédé de fabrication et pour générer un signal d'exigence de qualité représentatif de ceci,

B. un moyen (100) pour l'introduction d'un signal numérique représentatif d'une caractéristique à base de qualité d'une apparition physique de l'élément de ressource et pour générer un signal de rapport de qualité représentatif de ceci,

C. un moyen (80) sensible audit signal d'exigence de qualité et audit signal de rapport de qualité pour générer un signal numérique indiquant si l'apparition physique de l'élément de ressource est un candidat destiné à être utilisé dans le procédé de fabrication.

**16.** Procédé de fonctionnement d'un appareil (5) de traitement de données numériques pour une commande d'un procédé de fabrication, comprenant les étapes :

A. d'introduction de signaux numériques représentatifs d'un ou plusieurs éléments de ressource consommés dans un procédé de fabrication,

B. d'introduction de signaux numériques représentatifs d'un ou plusieurs éléments de ressource produits par ledit procédé de fabrication,

C. de génération de signaux de sortie représentatifs d'au moins des parties sélectionnées dudit procédé de fabrication, comportant des relations de fabrication associées avec celles-ci, lesdites relations de fabrication comportant au moins l'une parmi une relation opérationnelle, une relation de planification et une relation financière,

D. d'introduction de signaux numériques représentant une ou plusieurs tâches effectuées au cours dudit procédé de fabrication, comportant chacune des signaux représentant (i) un ou plusieurs éléments de ressource consommés par la tâche, (ii) un ou plusieurs éléments de ressource produits par la tâche, (iii) une ou plusieurs opérations de production effectuées au cours de la tâche, et (iv) des relations de fabrication entre la tâche et une ou plusieurs autres tâches, et

E. de génération et de stockage d'un modèle de production représentant ledit procédé de fabrication et comportant des signaux représentatifs de tâches représentant les tâches effectuées au cours de ce procédé, chaque signal représentatif de tâche comportant des signaux représentant (i) un ou plusieurs éléments de ressource consommés par la tâche associée, (ii) un ou plusieurs éléments de ressource produits par la tâche associée, (iii) une ou plusieurs opérations de production effectuées au cours de la tâche associée, et (iv) des relations de fabrication entre la tâche associée et une ou plusieurs autres tâches, à la suite de quoi lesdits signaux représentatifs de tâches représentent des relations de fabrication entre des ressources consommées et produites par chaque tâche et par le procédé de fabrication sur l'une quelconque des bases suivantes

i) un à un,
ii) un à plusieurs,
iii) plusieurs à un,
iv) plusieurs à plusieurs.

**17.** Procédé de fonctionnement d'un appareil de traitement de données numériques selon la revendication 16,

(a) comprenant l'étape supplémentaire de génération d'un signal numérique représentatif d'au moins une valeur parmi une valeur de production, de rendement, de consommation, de composition et de variation dans celle-ci, d'éléments sélectionnés parmi lesdits éléments de ressource ; ou

(b) comprenant les étapes supplémentaires

A. d'introduction d'un signal numérique représentatif d'une ou plusieurs tâches effectuées au cours dudit procédé de fabrication, et

B. de réponse audit signal représentatif de tâche pour générer et stocker un signal numérique représentatif d'au moins l'un parmi

i) un ou plusieurs éléments de ressource consommés par la tâche associée,
ii) un ou plusieurs éléments de ressource produits par la tâche associée,
iii) une ou plusieurs opérations de production effectuées au cours de la tâche associée, et
iv) des relations de fabrication entre la tâche associée et une ou plusieurs autres tâches ; ou

(c) comprenant l'étape supplémentaire de génération d'un signal numérique définissant un élément de ressource produit par une tâche pour être un élément de ressource consommé par la même tâche ou une autre tâche.

**18.** Procédé de fonctionnement d'un appareil de traitement de données numériques selon la revendication 16, comprenant l'étape supplémentaire de génération d'un signal numérique représentatif d'un coût associé avec au moins l'une parmi une ressource consommée, une ressource produite, et une tâche, et par exemple

comprenant l'étape supplémentaire de génération d'un signal numérique représentatif d'un roulement de coût associé avec une ou plusieurs tâches dudit procédé de fabrication.

**19.** Procédé de fonctionnement d'un appareil de traitement de données numériques selon la revendication 18, comprenant l'étape supplémentaire d'introduction d'un signal numérique représentatif d'un coût associé avec un ou plusieurs éléments de ressource consommés au cours dudit procédé de fabrication.

**20.** Procédé de fonctionnement d'un appareil de traitement de données numériques selon la revendication 19, comprenant l'étape supplémentaire de génération d'un signal numérique représentatif d'une répartition de coût associée avec chacune de plusieurs ressources associées avec l'une desdites tâches, et par exemple

comprenant l'étape supplémentaire de génération d'un signal numérique représentatif d'une valeur réalisable nette d'un ou plusieurs éléments de ressource produits par une tâche.

**21.** Procédé de fonctionnement d'un appareil de traitement de données numériques selon la revendication 16,

(a) comprenant l'étape supplémentaire de génération d'un signal numérique définissant au moins l'un desdits modèles de production comme étant un modèle de production principal et définissant l'autre desdits modèles de production comme étant dépendant dudit modèle de production principal, chacun desdits modèles de production dépendants ayant un ou plusieurs éléments de ressource consommés en commun avec un élément de ressource consommé correspondant, associé avec ledit modèle de production principal ; ou

(b) comprenant l'étape supplémentaire de génération d'un signal numérique représentatif d'un type de modèle de production et pour associer ce signal de type de modèle de production avec un ou plusieurs modèles de production ayant des caractéristiques opérationnelles, financières ou de planification, similaires ; ou

(c) comprenant les étapes supplémentaires

A. d'introduction d'un signal numérique représentatif d'une quantité d'un ou plusieurs éléments de ressource produits par ledit procédé de fabrication, et

B. de génération d'un signal numérique représentatif d'une quantité d'un ou plusieurs éléments de ressource consommés par ledit procédé de fabrication dans la production desdits éléments de ressource, et par exemple

comprenant l'étape supplémentaire de génération d'un signal numérique représentatif d'une répartition de production associée avec chacune de plusieurs ressources produites par une ou plusieurs desdites tâches ; ou

(d) comprenant les étapes supplémentaires

A. d'introduction d'un signal numérique représentatif d'une quantité d'un premier élément de ressource produit par ledit procédé de fabrication, et

B. de génération d'un signal numérique représentatif d'une quantité d'un ou plusieurs autres éléments de ressource produits par ledit procédé de fabrication en conjonction avec la production dudit premier élément de ressource, et par exemple

comprenant l'étape supplémentaire de génération d'un signal numérique représentatif d'une répartition de production associée avec chacune de plusieurs ressources produites par une ou plusieurs destites tâches ; ou

(e) comprenant les étapes supplémentaires

A. d'introduction d'un signal numérique représentatif d'une sortie temporelle ou volumétrique d'une période de production correspondant avec le modèle de production,

B. d'introduction d'un signal numérique représentatif d'une sortie temporelle ou volumétrique d'une série de tâches représentée par une tâche associée avec ledit modèle de production,

C. d'introduction d'un signal numérique représentatif d'une relation mathématique entre la sortie de période de production et la sortie de série de tâches, et

D. de génération d'un signal numérique représentatif d'un certain nombre desdites séries de tâches nécessaires pour compléter ladite période de production ; ou

(f) comprenant les étapes supplémentaires

A. d'introduction d'un signal numérique représentatif d'un type de relation quantitative entre un élément de ressource consommé par une tâche et une ou plusieurs ressources produites par cette même tâche,

B. de réponse audit signal représentatif de type de relation quantitative pour générer de manière sélective un signal numérique représentatif de l'une

I. d'une relation quantitative linéaire entre ladite ressource consommée et ladite ou lesdites une ou plusieurs ressources produites, et

ii. d'une relation de fonction échelon entre ladite ressource consommée et ladite ou lesdites une ou plusieurs ressources produites ; ou

(g) comprenant les étapes supplémentaires

A. d'introduction d'un signal de tâche qui peut être rapportée, indiquant si des quantités d'une ressource produite par une tâche peuvent être rapportées, et

B. de réponse audit signal de tâche qui peut être rapportée pour accepter de manière sélective des signaux numériques d'entrée représentatifs de quantités de ressources produites par la tâche ; ou

(h) comprenant les étapes supplémentaires

A d'introduction et de stockage d'un signal numérique représentatif d'une quantité d'une apparition physique d'un élément de ressource consommé, disponible pour être utilisé dans ledit procédé de fabrication,

B. de modification dudit signal représentatif de quantité stockée pour refléter une quantité dudit élément de ressource consommé par ledit procédé de fabrication, et

C. de génération d'un signal numérique représentatif de quantités dudit élément de ressource consommé par ledit procédé de fabrication dans la production desdits éléments de ressource sans modifier ledit signal représentatif de quantité stockée ; ou

(i) comprenant les étapes supplémentaires

A. d'introduction d'un signal numérique représentatif d'une quantité d'une ressource consommée utilisée dans une tâche associée avec ledit modèle de production,

B. d'introduction d'un signal numérique représentatif d'une durée temporelle d'une opération associée avec cette tâche, et

C. de génération d'un signal numérique établissant une relation entre une quantité d'une ressource consommée dans la tâche et la durée temporelle d'une opération associée avec la tâche.

**22.** Procédé de fonctionnement d'un appareil de traitement de données numériques selon la revendication 16, comprenant l'étape supplémentaire de génération et de stockage d'un signal numérique représentatif d'une caractéristique de production associée avec au moins l'une desdites ressources, ladite caractéristique de production comportant un ou plusieurs attributs parmi un attribut financier, opérationnel, de planification et de suivi, ; associé avec la ressource.

**23.** Procédé de fonctionnement d'un appareil de traitement de données numériques selon la revendication 22, comprenant l'étape supplémentaire de génération d'un signal numérique définissant une ou plusieurs desdites ressources comme ayant des caractéristiques de production similaires.

**24.** Procédé de fonctionnement d'un appareil de traitement de données numériques selon la revendication 22, comprenant l'étape supplémentaire de génération d'un signal numérique représentant un classement d'emplacement associé avec une apparition physique d'un élément de ressource, ledit classement d'emplacement comportant une ou plusieurs caractéristiques de production.

**25.** Procédé de fonctionnement d'un appareil de traitement de données numériques selon la revendication 24,

(a) comprenant l'étape supplémentaire de modification d'un signal numérique représentatif d'une ou plusieurs caractéristiques de production associée(s) avec une apparition physique d'un élément de ressource, et, par exemple,

comprenant l'étape supplémentaire de modification d'un signal numérique qui représente une apparition physique d'un élément de ressource de manière à représenter une apparition physique d'un autre élément de ressource et pour, simultanément, modifier un signal représentatif de caractéristique de production associé avec le signal représentatif d'apparition physique ; ou

(b) comprenant l'étape supplémentaire d'introduction d'un signal numérique représentatif d'un classement d'emplacement défini par l'utilisateur, et, par exemple,

comprenant l'étape supplémentaire de modification d'un classement d'emplacement défini par l'utilisateur associé avec une apparition physique dudit élément de ressource.

**26.** Procédé de fonctionnement d'un appareil de traitement de données numériques selon la revendication 23, comprenant les étapes supplémentaires de

A. génération d'un signal d'équilibre/non équilibre représentatif d'une caractéristique de suivi d'un élément de ressource, et

B. réponse audit signal d'équilibre/non équilibre pour suivre de manière sélective des apparitions physiques d'un élément de ressource.

**27.** Procédé de fonctionnement d'un appareil de traitement de données numériques selon la revendication 22,

(a) comprenant les étapes supplémentaires

A. d'introduction d'un signal numérique représentatif d'une unité standard de mesure associée avec un élément de ressource,

B. d'introduction d'un signal numérique représentatif d'une unité de transaction de mesure associée avec une apparition physique dudit élément de ressource,

C. d'introduction d'un signal numérique représentatif d'un facteur de conversion pour convertir une quantité représentative d'une apparition physique de l'élément de ressource entre l'unité standard de mesure associée avec l'élément de ressource et l'unité de mesure associée avec l'apparition physique de l'élément de ressource,

D. d'introduction d'un signal numérique représentatif d'une quantité exprimable dans l'unité de transaction de mesure et associée avec une apparition physique d'un élément de ressource, et

E. de conversion de ce signal représentatif de quantité en un signal numérique représentatif d'une quantité équivalente exprimable dans l'unité standard de mesure et pour générer un signal représentatif de ceci ; ou

(b) comprenant les étapes supplémentaires

A. d'introduction d'un signal numérique représentatif d'une unité standard de mesure associée avec un élément de ressource,

B. d'introduction d'un signal numérique représentatif d'une unité de transaction de mesure associée avec un emplacement de stockage pour stocker une apparition physique d'un élément de ressource,

C. d'introduction d'un signal numérique représentatif d'un facteur de conversion pour convertir une quantité entre l'unité de transaction de mesure associée avec l'emplacement de stockage et l'unité standard de mesure associée avec un élément de ressource stocké dans cet emplacement de stockage,

D. d'introduction d'un signal numérique représentatif d'une quantité exprimable dans l'unité de transaction de mesure et associée avec le stockage d'une apparition physique d'un élément de ressource, et

E. de conversion de cette quantité en une quantité équivalente exprimable dans l'unité standard de mesure et pour générer un signal représentatif de ceci ; ou

(c) comprenant les étapes supplémentaires

A. d'introduction d'un signal numérique représentatif d'une quantité théorique, à un niveau prédéterminé, d'un élément de ressource consommé nécessaire pour la production d'un élément de ressource produit,

B. d'introduction d'un signal numérique représentatif d'une quantité de pourcentage de potentiel d'une apparition physique dudit élément de ressource consommé,

C. de génération d'un signal numérique représentatif d'une quantité physique de ladite apparition physique dudit élément de ressource consommé nécessaire pour la production, ledit signal nécessaire de quantité physique étant exprimé en termes dudit pourcentage de potentiel et étant fondé sur le niveau de potentiel prédéterminé ; ou

(d) comprenant les étapes supplémentaires

A. d'introduction d'un signal numérique représentatif d'une exigence de qualité pour un élément de ressource consommé dans le procédé de fabrication et pour générer un signal d'exigence de qualité représentatif de ceci,

B. d'introduction d'un signal numérique représentatif d'une caractéristique à base de qualité d'une apparition physique de l'élément de ressource et pour générer un signal de rapport de qualité représentatif de ceci,

C. de réponse audit signal d'exigence de qualité et audit signal de rapport de qualité pour générer un signal numérique indiquant si l'apparition physique de l'élément de ressource est un candidat destiné à être utilisé dans le procédé de fabrication.

*FIG. 1*

*FIG. 2*

**FIG. 3**

*FIG. 4*

```
5/05/86   14:14:26        P R I S M   P M   D I A G R A M   R E P O R T            PAGE    1    MDR220
                                                                                   ENTITY -  STANDARD

LIMITS:     PM TYPE    VP TO VP          PM NAME:   POTATO PREP TO  POTATO PREP
OPTIONS:    ONE-TIME COMMENTS:
───────────────────────────────────────────────────────────────────────────────────────────────────
PM TYPE              VP        PM NAME          POTATO PREP        DESCRIPTION      PREP POTATOES
PARENT PM TYPE                 PARENT PM NAME                      DEPENDENT Y/N    N
CUMULATIVE LEAD TIME 5         STD BATCH SIZE   60.00000           STD BATCH UM     LB
───────────────────────────────────────────────────────────────────────────────────────────────────
RESC#  MAPV0200
DICED POTATOES
CLASS  MA   SUB-CLASS PV
QTY-PM             60.00000
QTY-TSK            60.00000
USER UM                 LB
COST DIST         100.000
PROD DIST         100.000
REPORTABLE              Y
PLANNING CODE           5
    └────────┐
    ┌─────────────────────────────────────────────┐
    │ TASK    DICE            SEQ #    2           │
    │ DICE THE POTATOES                           │
    │ STD TASK BATCH SIZE 60.00000                │
    │ STD BATCH-UM              LB                │
    │ BATCH EQUIV           1.00000              │
    │ QTY EQUIV            60.00000              │
    │ CUM LEAD TIME              5               │
    └─────────────────────────────────────────────┘
             │
             ├──────────────────────┬──────────────────────────┐
             │                      │                          │
        RESC#  *STREAM*         RESC#    LAUN0100          RESC#    PLL20200
        PEELED POTATOES/STREAM  MACHINE OPERATOR           DICING MACHINE
        CLASS  SUB-CLASS        CLASS   LA  SUB-CLASS  UN  CLASS  PL  SUB-CLASS  L2
        COST TYPE           N   COST TYPE            F      COST TYPE            F
        COST METH               COST METH            S      COST METH            S
        QTY-PM       60.00000   QTY-PM         1.00000      QTY-PM         1.00000
        QTY-TSK      60.00000   QTY-TSK        1.00000      QTY-TSK        1.00000
        USER UM            LB   USER UM             HR      USER UM             HR
        THEO CONS CD       T    THEO CONS CD        T       THEO CONS CD        T
   ↓    PLANNING CODE           PLANNING CODE       O       PLANNING CODE       O

    • • • • •    E N D    O F    R E P O R T    • • • • •
```

**FIGURE 5**